# EUROPEAN PATENT APPLICATION

(11) **EP 1 967 961 A2**
(43) Date of publication of application: **10.09.2008**
(21) Application number: 08011256.8
(22) Date of filing: 30.07.2001
(51) Int. Cl.: G06F 15/16, H04L 12/24

(54) **Agent system**

(30) Priority: 31.07.2000 JP 2000230847
(62) Divisional of application: 01953335.5
(71) Applicant: Kabushiki Kaisha Toshiba, Minato-ku Tokyo (JP)
(72) Inventor: Maeda, Takeshi, Musashino-shi, Tokyo, 180 0001 (JP); Katayama, Shigeki, Fuchu-shi, Tokyo 183-0043 (JP); Hatanaka, Takahiro, Fuchu-shi, Tokyo 183-0043 (JP); Tamura, Tetsuo, Kawasaki-shi, Kanagawa 211-0041 (JP); Shimoo, Manabu, Fuchu-shi, Tokyo 183-0045 (JP); Koizumi, Yoshihiro, Hachioji-shi, Tokyo 193-0941 (JP); Tanaka, Tatsuji, Saitama-shi, Saitama 336-0034 (JP); Shono, Takaya, Fuchu-shi, Tokyo 183-0034 (JP); Sekiguchi, Katsuhiko, Tama-shi, Tokyo 206-0012 (JP); Sawai, Koichi, Tokyo 177-0045 (JP)
(74) Representative: Schmidtchen, Jürgen Christian

(57) **Abstract**

In an agent system having a plurality of agents each of which executes predetermined processing while moving through a plurality of nodes connected to an information network, the plurality of nodes respectively have a plurality of agent platforms which receive and execute the agents, one of the agent platform and the node has synchronization means, and when the plurality of agents which are running on the same node should synchronously execute operation, the plurality of agents on the same node execute processing synchronously by sending a synchronization request message to the synchronization means.

## Description

### Technical Field

The present invention relates to an agent system which executes supervisory control of an object system such as an power system on a communication system coupled through an information network including Local Area Network (LAN), Wide Area Network (WAN), and Internet network etc., (This will be referred to as an "network" hereinafter.).

### Background Art

An agent system is a system in which an agent (movable program) moves to each node (computer) of an object system and performs appropriate processing at an appropriate position. A related invention is described in, e.g., Jpn. Pat. Appln. KOKAI Publication No. 10-257661. In this power system supervisory control system, for relay setting of the power system supervisory control system by an agent, a program module, i.e., an agent moves to each apparatus in the power system to set the protection relay apparatus, thereby executing efficient supervisory control of the power system distributed in a wide area.

In such conventional agent systems, however, there is prepared only a mechanism which causes each agent to independently move among the apparatuses and execute target processing. For this reason, to execute operation for which a plurality of agents must cooperatively perform processing, it is necessary to have not only a thorough knowledge about the process flow of the operation but also that about the internal configuration of each agent. In addition, a program which causes the agents to cooperatively perform processing must be added to each agent.

In the conventional agent systems, even when an agent has been rewritten to processing unintended by the agent sender due to some reason during movement through the network, the agent receiving side has no mechanism for determining the intension of the agent sender. Hence, processing that is not intended by the agent sender may be executed on the agent receiving side.

Furthermore, when a number of agents are sent to a given apparatus, agent processing with high priority and that with low priority are executed in the same way.

An power system protection system using a GPS is disclosed in Jpn. Pat. Appln. KOKAI Publication No. 11-341706. However, this invention realizes system protection using data obtained by adding time data acquired from the GPS to electrical quantity data of the protection relay.

### Disclosure of Invention

It is an object of the present invention to provide an agent system in which a plurality of agents cooperative to execute a single purpose.

According a first to aspect of the present invention, there is provided an agent system having a plurality of agents each of which executes predetermined processing while moving through a plurality of nodes connected to an information network, characterized in that the plurality of nodes respectively have a plurality of agent platforms which receive and execute the agents, one of the agent platform and the node has synchronization means, and when the plurality of agents which are running on the same node should synchronously execute operation, the plurality of agents on the same node execute processing synchronously by sending a synchronization request message to the synchronization means.

### Brief Description of Drawings

FIG. 1 is a view of an agent system according to the first embodiment of the present invention;
FIG. 2 is a view for complementarily explaining FIG. 1;
FIG. 3 is a flow chart for explaining FIG. 1;
FIG. 4 is a view of an agent system according to the second embodiment of the present invention;
FIG. 5 is a view of an agent system according to the third embodiment of the present invention;
FIG. 6 is a view of an agent system according to the fourth embodiment of the present invention;
FIG. 7 is a view of an agent system according to the fifth embodiment of the present invention;
FIG. 8 is a view of an agent system according to the sixth embodiment of the present invention;
FIG. 9 is a view of an agent system according to the seventh and eighth embodiments of the present invention;
FIG. 10 is a flow chart for explaining FIG. 8;
FIG. 11 is a view of an agent system according to the ninth embodiment of the present invention;
FIG. 12 is a view of an agent system according to the 10th embodiment of the present invention;
FIG. 13 is a view of an agent system according to the 11th embodiment of the present invention;
FIG. 14 is a view of an agent system according to the 12th, 13th, and 14th embodiments of the present invention;
FIG. 15 is a view of an agent system according to the 15th embodiment of the present invention;
FIG. 16 is a view for complementarily explaining FIG. 15;
FIG. 17 is a view of an agent system according to the 16th embodiment of the present invention;
FIG. 18 is a view of an agent system according to the 17th embodiment of the present invention;
FIG. 19 is a view of an agent system according to the 18th embodiment of the present invention;
FIG. 20 is a view of an agent system according to the 19th embodiment of the present invention;
FIG. 21 is a view for complementarily explaining FIG. 20;
FIG. 22 is a view of an agent system according to the 20th embodiment of the present invention;
FIGS. 23A and 23B are views for complementarily explaining FIG. 22; and
FIG. 24 is a view for complementarily explaining FIG. 22.

### Best Mode for Carrying Out the Invention

The embodiments of the present invention will be described below with reference to the accompanying drawings. An agent system of the present invention can be applied not only to a specific object system but also various kinds of systems. In the following embodiments, cases wherein the agent system is applied to protection and control of an power system will be described.

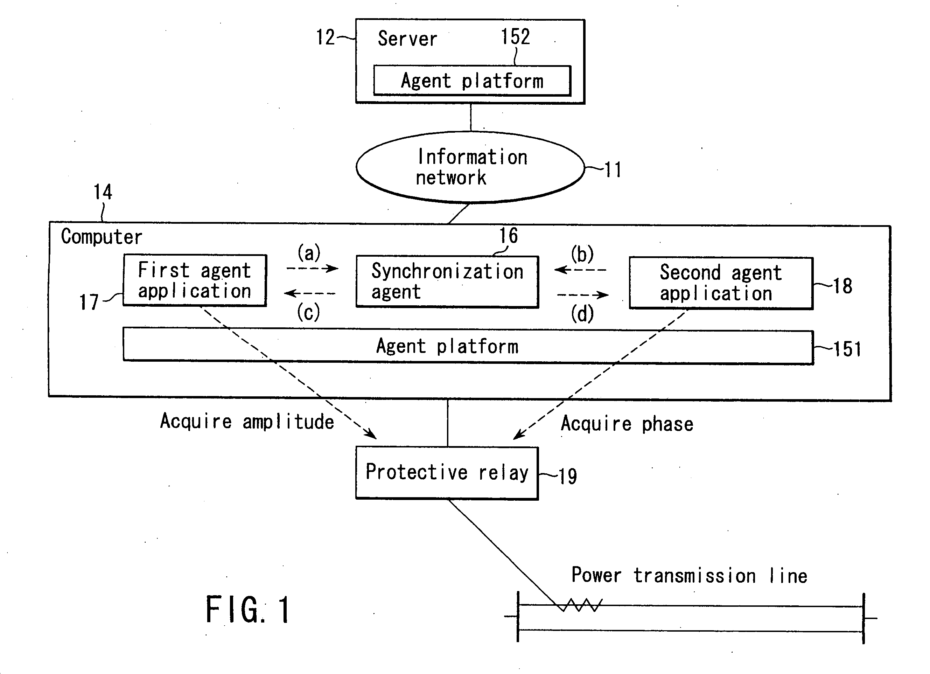

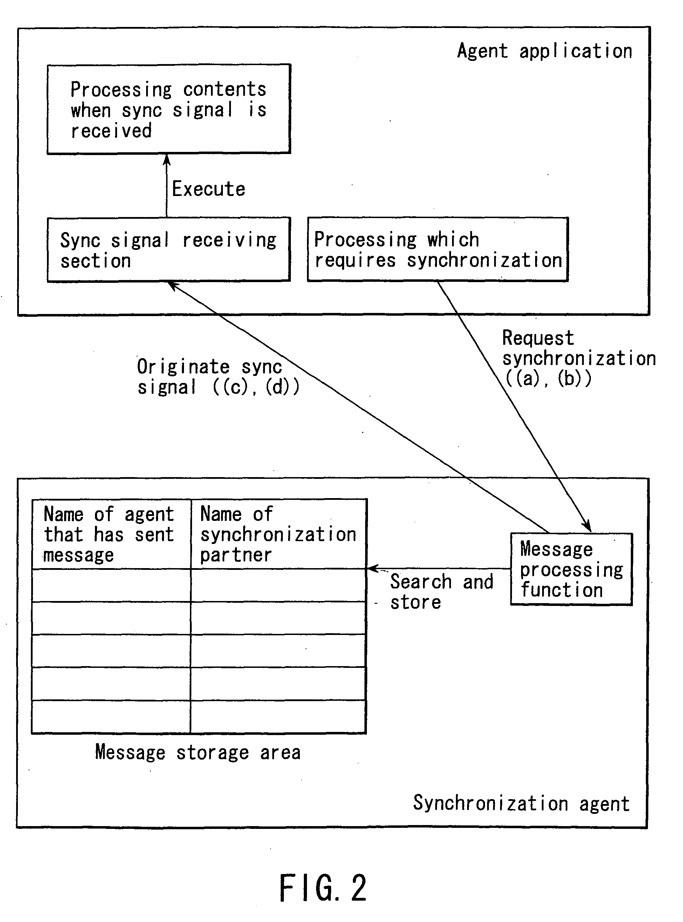

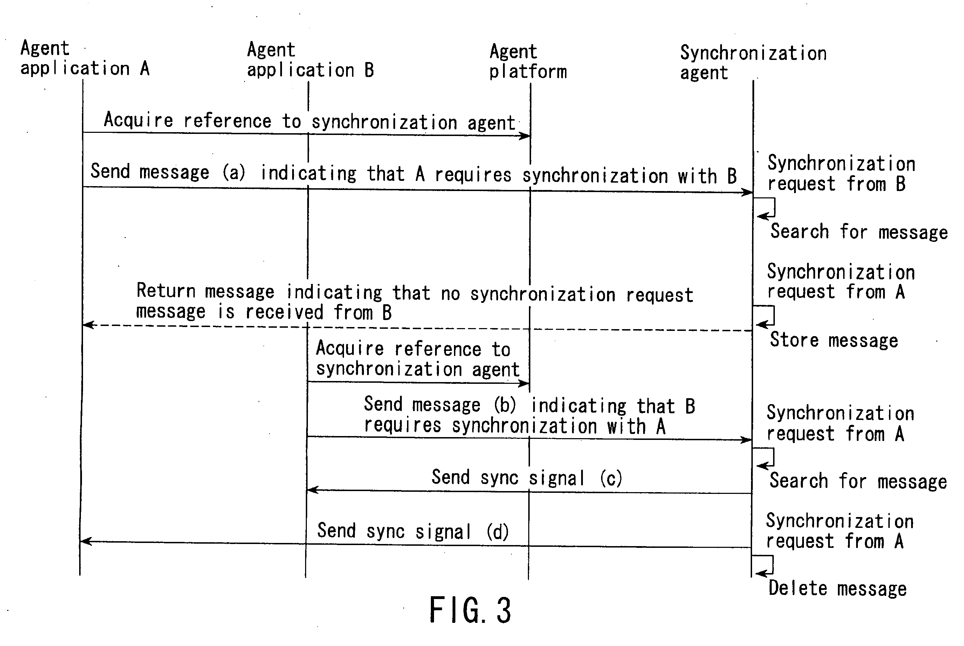

FIG. 1 is a view showing a configuration in which an agent system according to the first embodiment of the present invention is applied to an power system protection system. FIG. 2 is a view for explaining the functions of a synchronization agent shown in FIG. 1. FIG. 3 is a sequence chart for explaining the process timing of each element in the system.

The system shown in FIG. 1 is a system that aims at acquiring an electrical quantity (voltage, current and power, including amplitude and phase) and the like of a protection relay 19 at a certain time. Referring to FIG. 1, an information network 11 connects a node (computer) 14 of the object system by a communication line. Only one computer 14 is illustrated in FIG. 1. However, a plurality of computers 14 may be connected.

The agent indicates an application program (in some cases, a movable program having unique data). This will be referred to as an "agent application" hereinafter.

The computer 14 functions as the interface between the protection relay 19 and the information network 11. The computer 14 has an agent platform 151. The agent platform 151 is a mechanism which provides an environment to receive an agent application and cause it to operate. A server 12 (installed in a control center (not shown)) sends an agent application to the agent platform 151 and acquires an electrical quantity of the protection relay 19.

The functions of a synchronization agent 16 and the functions of first and second agent applications 17 and 18 which execute synchronization processing using the synchronization agent 16 will be described with reference to FIG. 2.

The synchronization agent has the following functions.
(1) Message Processing Function (When a synchronization request is received from an agent application, the synchronization agent searches the next message storage area and checks whether an agent application to which a sync signal is to be sent is registered. When an agent application is registered, the synchronization agent sends a sync signal to the object agent. When no agent application is registered, the synchronization agent stores the request in the next message storage area) .
(2) Function as Message Storage Area (Function of storing a synchronization request)

Each of the first and second agent applications 17 and 18 has a portion which receives a sync signal sent from the synchronization agent 16 by the message processing function and a portion where processing to be executed upon receiving a sync signal is described. In the following embodiments, assume that the first agent application 17 acquires amplitude, and the second agent application 18 acquires phase.

In an agent platform 152 of the server 12, the synchronization agent 16 and the first and second agent applications 17 and 18 (not shown) are generated. The synchronization agent 16 and the first and second agent applications 17 and 18 are sent from the server 12 to the computer 14 through the information network.

More specifically, the first agent application 17 which acquires an electrical quantity (amplitude) of the protection relay 19 and the second agent application 18 which acquires an electrical quantity (phase) of the protection relay 19 are sent from the server 12 to the computer 14 through the information network 11 and received by the agent platform 151 when the electrical quantity (amplitude and phase) of the protection relay 19 should be acquired.

The synchronization agent 16 sent to the computer 14 in advance executes synchronization processing between the first agent application 17 and the second agent application 18. More specifically, the synchronization agent 16 simultaneously sends sync signals to the first agent application 17 and second agent application 18. Agent application processing to be executed upon receiving a sync signal is defined for each agent application. In this system, it is defined in advance that the first agent application 17 should acquire amplitude, and the second agent application 18 should acquire phase, as described above. In addition, the synchronization agent 16 has a program which prompts processing for synchronization processing between the agent applications 17 and 18. In many cases, the synchronization agent 16 is resident in the agent platform 151. However, when the synchronization agent 16 is resident, the resource of the computer 14 is considerably consumed. To prevent this, the server 12 or agent platform 151 can determine the necessity of the synchronization agent 16 and generate or erase it, or move it to another node, like other agent applications.

The process flow of the entire system will be described with reference to FIG. 3. There is a request to make the first agent application 17 and second agent application 18 synchronously acquire amplitude and phase at the same time. FIG. 3 shows the process timing in this case. For example, the first agent application 17 sends a reference request to the agent platform 151 to check whether the synchronization agent 16 is present. In response to the reference request, the agent platform 151 refers to the presence of the synchronization agent 16 and sends a reply to the first agent application 17 to notify it of the presence. The first agent application 17 sends, to the synchronization agent 16 resident in the agent platform of a node A, a message (a) (the name of the synchronization partner) indicating that "the first agent application 17 requires synchronization with the second agent application 18".

Upon receiving this message (a), the synchronization agent 16 checks whether the internal message storage area of the synchronization agent 16 has a message (b) from the second agent application 18, which indicates that "the second agent application 18 requires synchronization with the first agent application 17". If the message is stored, the synchronization agent 16 can confirm that both the first agent application 17 and the second agent application 18 require synchronization with each other. Hence, the synchronization agent 16 simultaneously sends sync signals (c) and (d) to the two agent applications. Upon receiving the sync signals (c) and (d), the first agent application 17 and second agent application 18 execute predetermined processing (acquisition of amplitude and phase at that moment), return to the server 12, and make a report of the acquired amplitude and phase.

If the synchronization agent 16 has received no message (b) from an agent B yet, the synchronization agent 16 temporarily stores the message in the message storage area. After receiving from the second agent application 18 the message (b) indicating that "the second agent application 18 requires synchronization with the first agent application 17", the synchronization agent 16 simultaneously sends the sync signals (c) and (d) to the first and second agent applications 17 and 18.

If the synchronization agent 16 is not resident in the agent platform 151, the absence of the synchronization agent 16 can be known when the agent application asks the agent platform 151 to refer to the synchronization agent. The subsequent processing of the agent application (for example, executing another processing or standing by until the synchronization agent arrives at the agent platform 151) is defined in the agent application by the user.

In a system using no synchronization agent 16 (i.e., a conventional agent system), a mechanism which makes synchronization with another agent application must be described in detail as a program to be added to the agent application. In addition, the first and second agent applications 17 and 18 must have, e.g., the following processing.
(1) The first agent application 17 seeks the second agent application 18 as a synchronization partner.
(2) Upon finding the second agent application 18, the first agent application 17 sends a sync signal to the second agent application 18. The second agent application 18 that has received the sync signal executes predetermined processing.
(3) The first agent application 17 executes processing that should be executed upon receiving a sync signal.

In the first embodiment, the synchronization agent 16 is introduced. Hence, a synchronization request method for the synchronization agent 16, e.g., a method of invoking the API of the synchronization agent 16 only needs to be added to the first and second agent applications 17 and 18. Accordingly, the agent programming amount is reduced. In addition, bugs in the synchronization program can be prevented.

The synchronization agent 16 needs to be resident only in the agent platform 151 that requires the synchronization function. Since the synchronization agent 16 is separated from the agent platform 151, the agent platform can be made compact.

Immediately before sending the first and second agent applications 17 and 18, the synchronization agent 16 is sent from the server 12 to the desired agent platform 151 and made resident in the agent platform 151. When the processes of the first and second agent applications 17 and 18 in the agent platform 151 are ended, and the synchronization agent 16 becomes useless, it can be returned to the server or erased. Accordingly, the synchronization agent 16 can be managed consistently, and the degree of freedom increases.

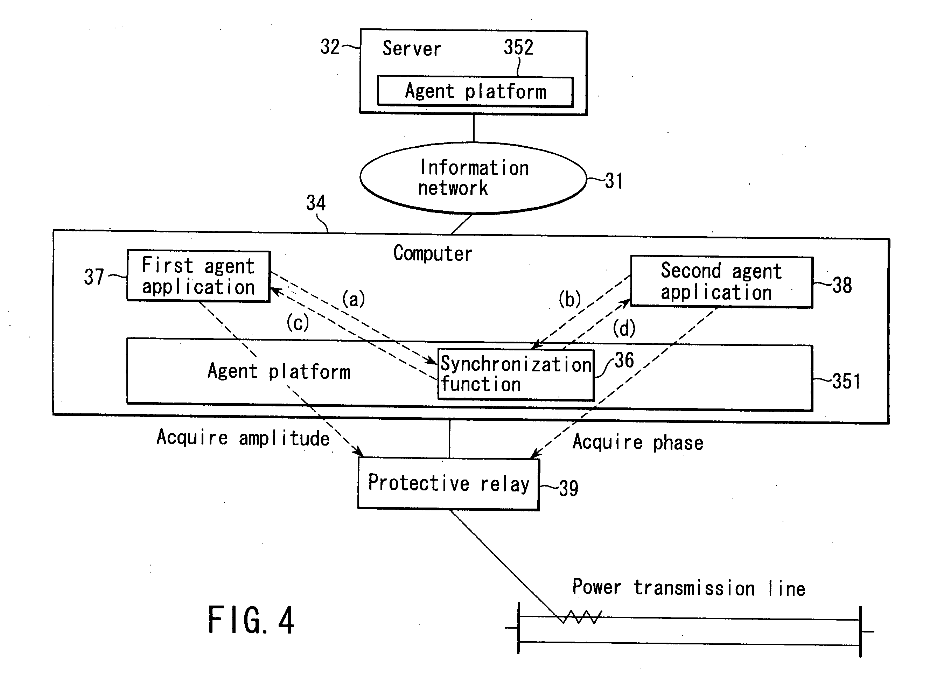

FIG. 4 is a view showing the configuration of an agent system according to the second embodiment of the present invention. FIG. 4 also shows a system that aims at acquiring the amplitude and phase of a protection relay 19, like FIG. 1. FIG. 4 is different from FIG. 1 in that a synchronization function 36 having the same program as that of a synchronization agent is added into an agent platform 351, and the synchronization agent is deleted. Synchronization between a first agent application 37 and a second agent application 38 is established through the synchronization function 36 in the same way as in FIG. 1. The remaining components correspond to those in FIG. 1. Reference numerals 11 to 19 correspond to reference numerals 31 to 39, respectively, and a detailed description thereof will be omitted.

In the second embodiment as well, since the synchronization function 36 is introduced, the first and second agent applications 37 and 38 only need to have a notification method for the second agent application 38 or first agent application 37 as a synchronization partner and the synchronization function 36. Accordingly, the agent programming amount is reduced, and bugs in the synchronization program can be prevented, as in the case of FIG. 1.

If the synchronization function is required by computers (nodes) arranged in correspondence with many or all protection relays 39, the synchronization function is added as one of the functions of an agent platform 351 in advance, as in this embodiment. This reduces the load for management.

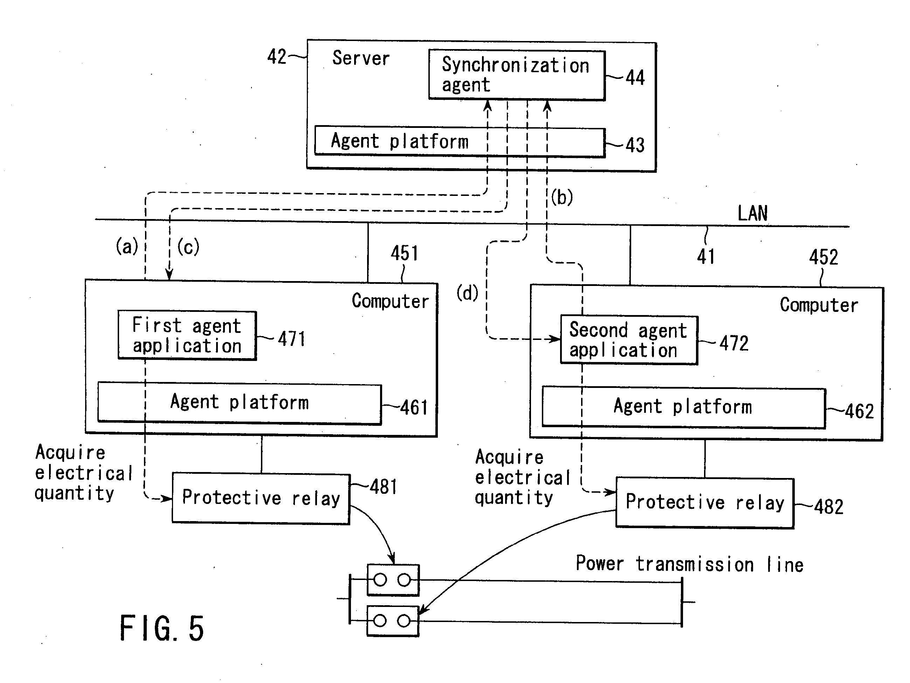

FIG. 5 is a view showing the configuration of an agent system according to the third embodiment of the present invention.

Unlike the system shown in FIG. 1, the system shown in FIG. 5 aims at reliably and quickly executing reclosing of two protection relays in a predetermined order.

In the third embodiment, an agent platform 43 and a synchronization agent 44 that runs on the agent platform 43 are arranged in a server 42 connected to a LAN 41, as shown in FIG. 5. The server 42 has the agent platform to send each agent application to - a computer (node) arranged in correspondence with a desired protection relay or store the agent application. In the third embodiment, the server 42 additionally has the synchronization agent 44. Computers 451 and 452 are connected to individual protection relays 481 and 482, respectively.

A first agent application 471 which runs on an agent platform 461 of the computer 451 is arranged on the agent platform 461. A second agent application 472 which runs on an agent platform 462 of the computer 452 is arranged on the agent platform 462. A case will be exemplified, in which synchronization between the first agent application 471 and the second agent application 472 is established by the synchronization agent 44 in the server 42.

When synchronization is to be established between the first agent application 471 (the agent application executes reclosing of the protection relay 481 upon receiving a sync signal) that exists in the computer 451 and the second agent application 472 (the agent application executes reclosing of the protection relay 482 upon receiving a sync signal) that exists in the computer 452 (reclosing is executed in an order of first to second agents (this will simply be expressed as "A → B" in the following embodiments)), the first agent application 471 sends, to the synchronization agent 44 that exists in the server 42, a message (a) indicating that "the first agent application 471 requires synchronization with the second agent application 472 in the order of A → B". If the synchronization agent 44 has already received, from the second agent application 472, a message (b) indicating that "the second agent application 472 requires synchronization in the order of A → B", the synchronization agent 44 sequentially sends sync signals (c) and (d) to the first and second agent applications 471 and 472. If no message (b) has been received from the second agent application 472 yet, the synchronization agent 44 stores the message (a) from the first agent application 471. When the message (b) indicating that "the second agent application 472 requires synchronization with the first agent application 471 in the order of A → B" is received from the second agent application 472, the synchronization agent 44 simultaneously sends the sync signals (c) and (d) to the first and second agent applications 471 and 472.

Upon receiving the sync signals (c) and (d), the first and second agent applications 471 and 472 execute reclosing of the corresponding protection relays in accordance with the predetermined processing. In this system, since the synchronization agent sends the sync signals (c) and (d) in this order, reclosing is sequentially executed in the order of the protection relays 481 and 482.

In the third embodiment, the synchronization agent 44 is arranged in the server 42. Hence, the first and second agent applications 471 and 472 that are present in the individual computers 451 and 452 can be synchronized with each other.

In the third embodiment, synchronization processing is executed using the synchronization agent. In a system configuration with a few number of times of synchronization, as in a system with few faults, the synchronization agent needs to be prepared only when synchronization processing is necessary. Hence, the efficiency increases.

Conventionally, reclosing is manually executed. In this system, however, reclosing can be executed at a much more accurate timing. In this system, therefore, a unique effect that the system can be stabilized as compared to reclosing by the conventional method can be obtained by applying the agent to system protection.

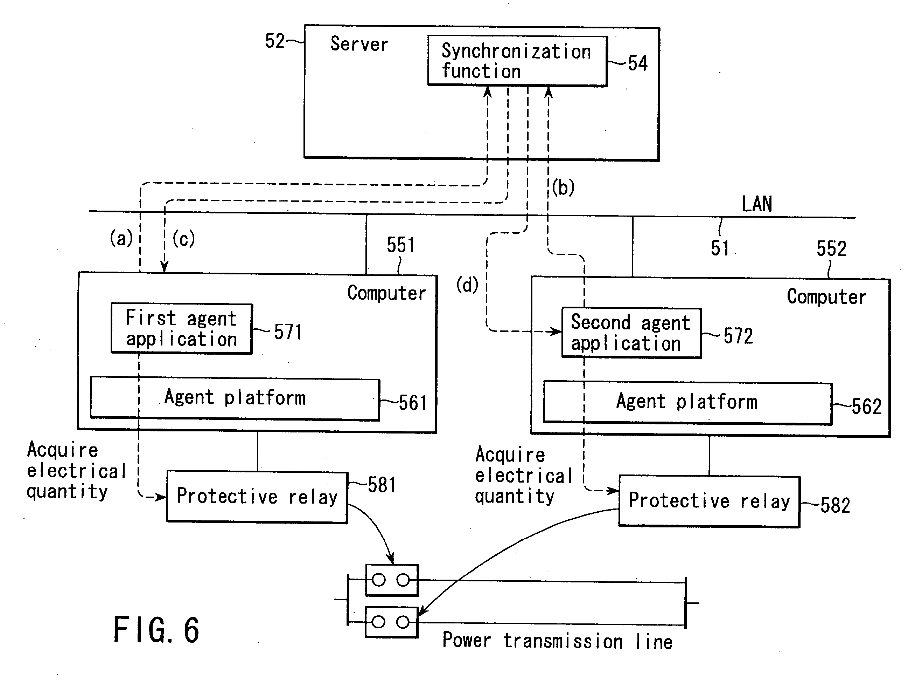

FIG. 6 is a view showing the configuration of an agent system according to the fourth embodiment of the present invention. Referring to FIG. 6, a synchronization function 54 having the same program as that of a synchronization agent is prepared in a server 52, and the synchronization agent is deleted. Synchronization between a first agent application 571 and a second agent application 572 is established through the synchronization function 54 in the same way as in FIG. 5. The remaining components correspond to those in FIG. 5. Reference numerals 41 to 482 correspond to reference numerals 51 to 582.

In the fourth embodiment as well, since the synchronization function 54 is introduced, the first and second agent applications 17 and 18 that are present in individual computers 551 and 552 can be synchronized with each other. Unlike FIG. 5, the synchronization function is always present in FIG. 6. For this reason, it is more efficient in a system in which faults frequently occur than in the system shown in FIG. 5 in which a synchronization agent is prepared every time synchronization processing is necessary.

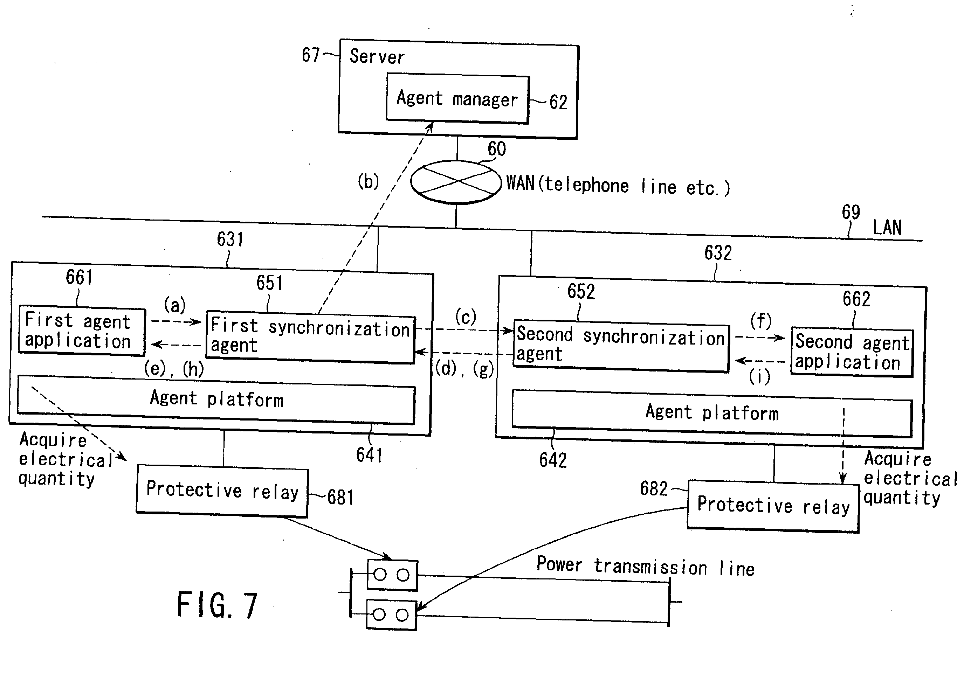

FIG. 7 is a view showing the configuration of an agent system according to the fifth embodiment of the present invention. Referring to FIG. 7, the basic configuration of the agent system and the object of the system are almost the same as those of the configuration shown in FIG. 5. However, the communication path between a server 67 and computers 631 and 632 is a low-speed line such as a telephone line (WAN 60). In the server, an agent manager 62 operates. The agent manager is a program which manages the positions of all agents in the system. Every time an event such as generation or movement of an agent takes places, the agent platform notifies the agent manager of the event.

In this case, a scheme for sending a sync signal from a server through a telephone line as in FIG. 5 or 6 poses a problem of synchronization accuracy.

In the fifth embodiment, a first synchronization agent 651 which runs on an agent platform 641 of the computer 631 is sent to the computer 631 and caused to control synchronization processing of a first agent application 661 arranged on the agent platform 641, as shown in FIG. 7. In addition, a second synchronization agent 652 which runs on an agent platform 642 of the computer 632 is sent to the computer 632 and caused to control synchronization processing of a second agent application 662 arranged on the agent platform 642.

A case will be exemplified, in which synchronization between the first agent application 661 in the computer 631 and the second agent application 662 in the computer 632 is established between the first synchronization agent 651 and ht second synchronization agent 652.

In the agent system shown in FIG. 7, synchronization between the first agent application in the computer 631 and the second agent application in the computer 632 is established in the following manner. The first agent application 661 sends, to the first synchronization agent 651 that is resident in the computer 631, a message (a) indicating that "the first agent application 661 requires synchronization with the second agent application 662 in the order of A → B". The first synchronization agent 651 sends a message (b) to the agent manager 62 to "inquire" about the node (computer) where the second agent application 662 as a synchronization partner is present. This inquiry is omitted when the node in which the second agent application 662 is present is known in advance because, for example, the first agent application 661 which knows the position of the second agent application 662 is sent from the server.

When it is found that the second agent application 662 as a synchronization partner is present in the computer 632, the first synchronization agent 651 sends, to the second synchronization agent 652 in the computer 632, a message (c) indicating that "the first agent application 661 requires synchronization with the second agent application 662 in the order of A → B".

Upon receiving the message (c), the second synchronization agent 652 stores this message (c). In addition, the second synchronization agent 652 sends a message (d) indicating that "synchronization is not established yet" to the first synchronization agent 652 and waits for a message from the second agent application 662. The first synchronization agent 651 also sends a message (e) indicating that "synchronization is not established yet" to the first agent application 661.

When a message (f) indicating that "the second agent application 662 requires synchronization with the first agent application 661 in the order of A → B" is received from the second agent application 662, the second synchronization agent 652 sends, to the first synchronization agent 651, a message (g) indicating that "synchronization between the first agent application 661 and the second agent application 662 is established" and then sends a sync signal (i) to the second agent application 662. Upon receiving the message (g), the first synchronization agent 651 sends a sync signal (h) to the first agent application 661 and deletes the stored message (a) from the first agent application 661.

In the fifth embodiment, the synchronization agents 651 and 652 placed in the computers 631 and 632 exchange information about synchronization, as described above. Hence, when the first and second agent applications 661 and 662 which exist in individual computers should synchronously execute processing, one of the agent applications can easily establish synchronization with the other only by sending a message to the synchronization agent that is resident in the same computer without being aware of the computer in which the other agent application is present.

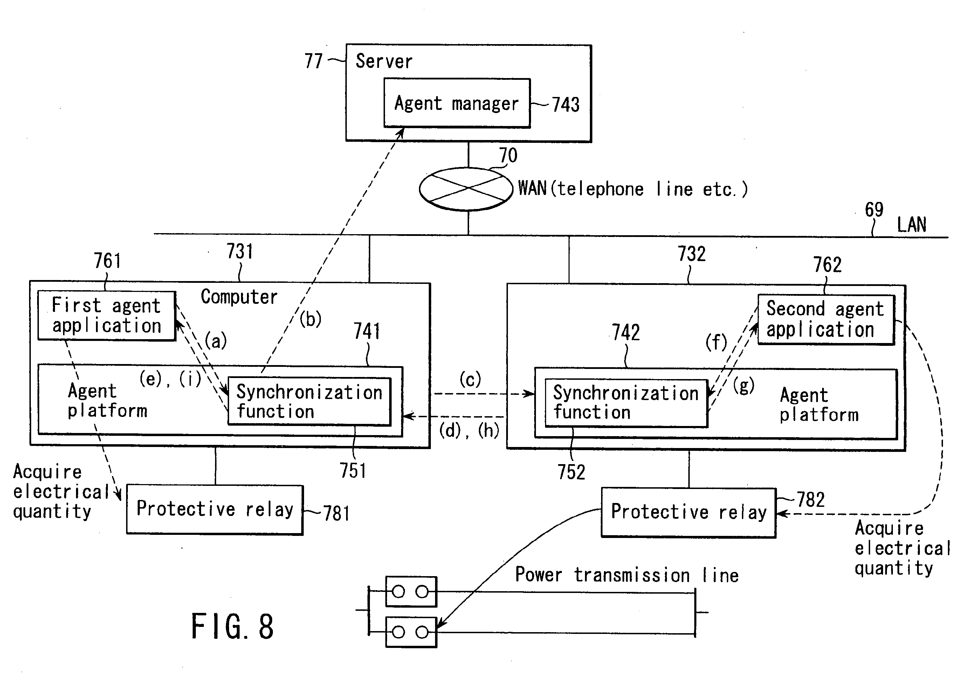

FIG. 8 is a view showing the configuration of an agent system according to the sixth embodiment of the present invention. FIG. 8 is different from FIG. 7 in that a synchronization function 751 having the same program as that of a synchronization agent is added into an agent platform 741 in a computer 731, and the synchronization agent is deleted. Similarly, a synchronization function 752 having the same program as that of a synchronization agent is added into an agent platform 642 in a computer 732, and the synchronization agent is deleted. Synchronization between a first agent application 761 and a second agent application 762 is established through the synchronization functions 751 and 752 in the same way as in FIG. 7. The remaining components correspond to those in FIG. 7. Reference numerals 61 to 682 correspond to reference numerals 71 to 782, respectively, and a detailed description thereof will be omitted.

In the sixth embodiment as well, by introducing the synchronization functions 751 and 752, synchronization between the first and second agent applications 761 and 762 present in the individual computers 731 and 732 can easily be established. If synchronization processing is to be frequently executed, bugs in the synchronization program can be prevented by adding the synchronization function to each agent platform because the server need not send a synchronization agent every time.

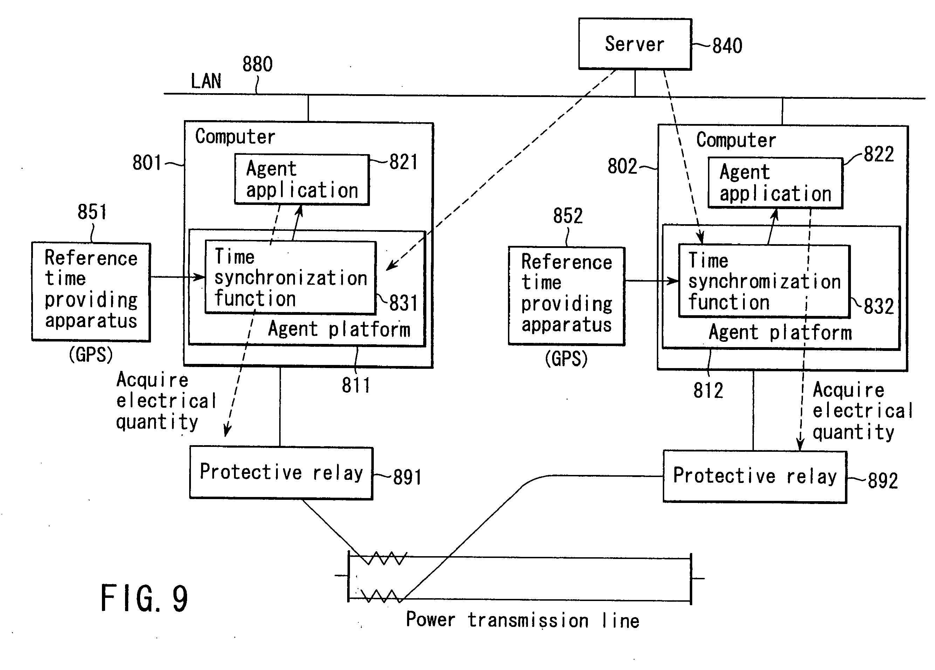

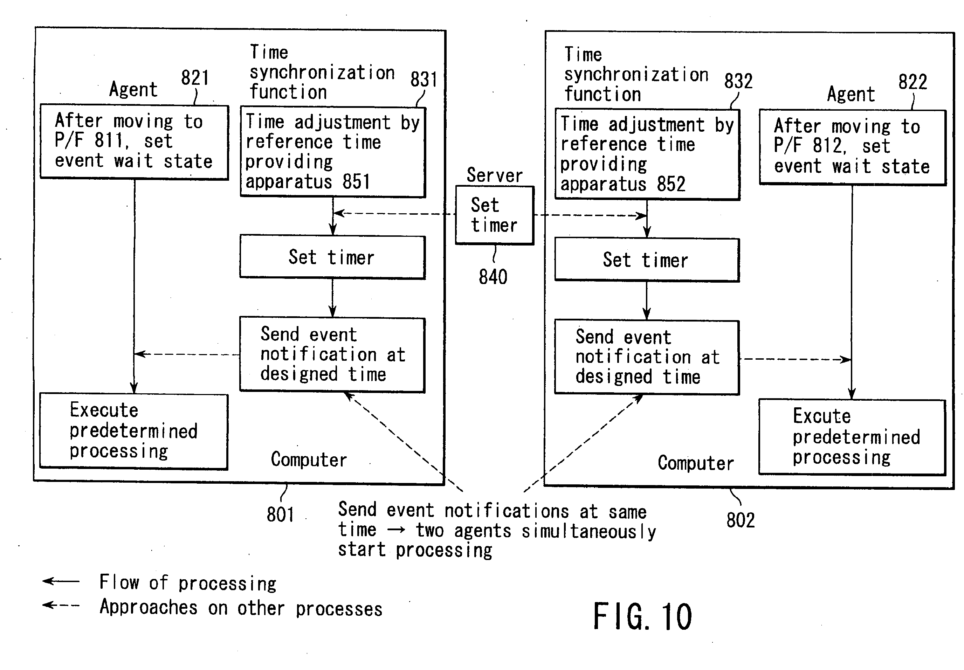

FIG. 9 is a view showing a system configuration according to the seventh embodiment of the present invention. FIG. 10 is a flow chart showing the timing of time synchronization processing.

FIG. 9 shows a system which simultaneously acquires the electrical quantities of different protection relays at a predetermined time.

Referring to FIG. 9, a computer 801 is connected to a LAN (Local Area Network) 880. A platform 811 serving as a program for receiving an agent runs. The platform 811 incorporates a time synchronization function 831 of notifying an object agent application 821 of an event at a designated time. The time synchronization function 831 synchronizes with a reference time providing apparatus 851. The reference time providing apparatuses 851 and 852 are apparatuses for providing a reference time. Assume that all reference time providing apparatuses provide the same reference time. As a reference time providing apparatus, the internal clock of each computer or the like can be used. Assume that the computer 801 can acquire an electrical quantity from a protection relay 891. Assume that the agent application 821 in which processing (electrical quantity acquisition in this system) to be executed upon receiving an event moves from the platform of another computer to the platform 811.

On the other hand, a computer 802 connected to the same LAN 880 as that of the computer 801 has the same configuration as that of the computer 801.

FIG. 10 shows the process flow in this configuration. The time synchronization function 831 in the computer 801 acquires the reference time from the reference time providing apparatus 851, thereby obtain the reference time. A time synchronization function 832 in the computer 802 also executes time adjustment. A server 840 (e.g., a control center) connected to the computers 801 and 802 through a network sets the processing start time to the time synchronization functions 831 and 832 through the network. At the designated time, if the object agent application 821 is present on the same platform 811, the time synchronization function 831 in which the processing start time is set notifies the agent application 821 of the event that the designated time has come. Upon receiving this event, the agent application 821 starts predetermined processing (electrical quantity acquisition from the protection relay 891). The time synchronization function 832 also executes the same operation as described above. At this time, since the time synchronization functions 831 and 832 are adjusted to the same reference time, the agent applications 821 and 822 simultaneously acquire the electrical quantities of the different protection relays 891 and 892 at the same time.

The processing start time may be set to the time synchronization function 831 not by the server 840 but by the agent application 821 that has moved to the platform 811. This also applies to the time synchronization function 832.

According to the seventh embodiment, even when a plurality of agents are present on individual computers, processes can be simultaneously executed at the same time.

As the eighth embodiment in FIG. 9, a GPS (Global Positioning System) is preferably used as a reference time providing apparatus. A GPS is an apparatus which acquires the reference time using a radio wave originated from an artificial satellite that travels round the earth and can realize an accuracy on the order of µ sec.

As in the seventh embodiment, processing is started by setting the processing start time and notifying the object agent of the event. According to this configuration, since time synchronization functions 831 and 832 are adjusted to the same reference time, agents 821 and 822 start processing at the same time.

According to the eighth embodiment, even when a plurality of agents are present on individual computers, processes can be simultaneously executed at the designated reference time. In the configuration using GPS, a time with very high accuracy can be realized.

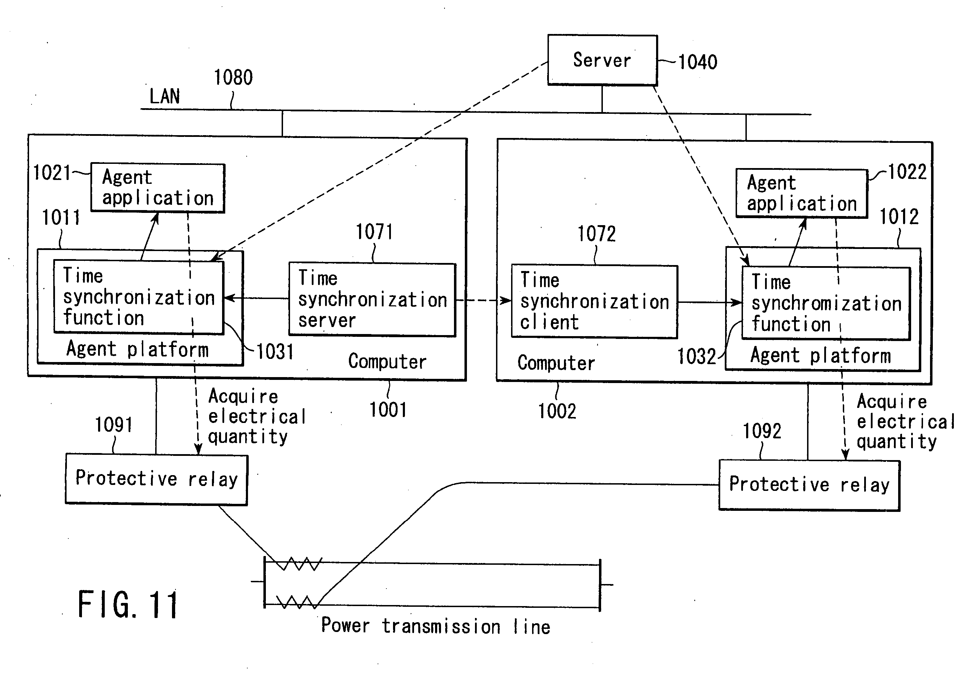

FIG. 11 is a view of a system according to the ninth embodiment of the present invention.

The purpose of this system is the same as that of the system shown in FIG. 9. The same reference numerals as in FIG. 9 denote the same components in FIG. 11, and a description thereof will be omitted. FIG. 11 is different from FIG. 9 in that it is not a reference time providing apparatus but a time synchronization server 1071 that synchronizes with a time synchronization function 1031, and it is a time synchronization client 1072 that synchronizes with a time synchronization function 1032. The time synchronization server 1071 is a program which provides the reference time of its own to the time synchronization client 1072 connected through a network and the time synchronization function 1031 in the same computer. The time synchronization client 1072 is a program which provides the reference time acquired from the time synchronization server to the time synchronization function in the same computer.

In this configuration, the time synchronization server 1071 notifies the time synchronization client 1072 of the time of its own in consideration of a network delay, thereby adjusting the time synchronization client 1072 to the same reference time as that of the time synchronization server 1071 (the time of the time synchronization server 1071). The time synchronization functions 1031 and 1032 acquire the reference time from the time synchronization server 1071 and time synchronization client 1072, respectively, to adjust their times to the reference time.

As in the seventh embodiment, processing is started by setting the processing start time and notifying the object agent of the event. According to this configuration, since the time synchronization functions 1031 and 1032 are adjusted to the same reference time, agents 1021 and 1022 start processing at the same time.

According to the ninth embodiment, even when a plurality of agents are present on individual computers, processes can be simultaneously executed at the designated reference time. As compared to the configuration shown in FIG. 9, the cost can be reduced because no hardware (GPS) dedicated to time synchronization is necessary.

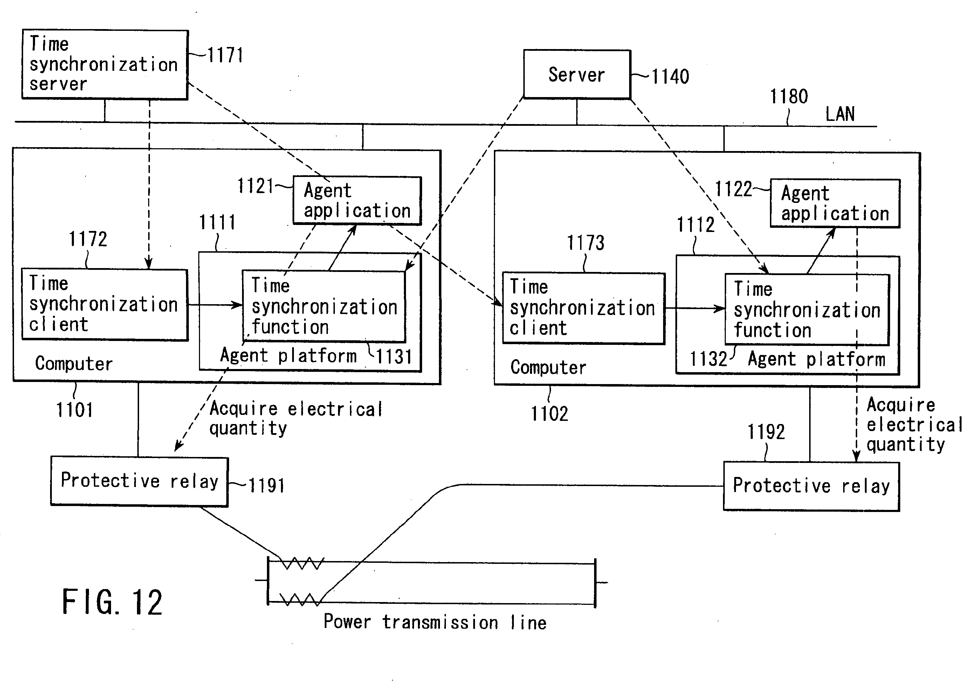

FIG. 12 is a view of a system configuration according to the 10th embodiment of the present invention.

The purpose of the system according to the 10th embodiment is also the same as that of the system shown in FIG. 9. The same reference numerals as in FIG. 9 denote the same components in FIG. 12, and a detailed description thereof will be omitted. FIG. 12 is different from FIG. 9 in that it is not a reference time providing apparatus but a time synchronization client 1172 that synchronizes with a time synchronization function 1131, it is a time synchronization client 1173 that synchronized with a time synchronization function 1132, and a server 1171 dedicated to time synchronization operates on a LAN 1180.

In the above configuration, the time synchronization server 1171 notifies the time synchronization clients 1172 and 1173 of the time of its own in consideration of a network delay whereby the time synchronization clients 1172 and 1173 are adjusted to the same reference time as that of the time synchronization server 1171 (the time of the time synchronization server 1171). The time synchronization functions 1131 and 1132 acquire the reference time from the time synchronization clients 1172 and 1173, respectively, to adjust their times to the reference time.

As in the seventh embodiment, processing is started by setting the processing start time and notifying the object agent of the event. According to this configuration, since the time synchronization functions 1131 and 1132 are adjusted to the same reference time, agent applications 1121 and 1122 start processing at the same time.

According to the 10th embodiment, a plurality of agents on individual computers can simultaneously execute processing at the same time. This configuration can also suppress the cost as compared to the configuration in FIG. 9 using GPS, as in FIG. 11.

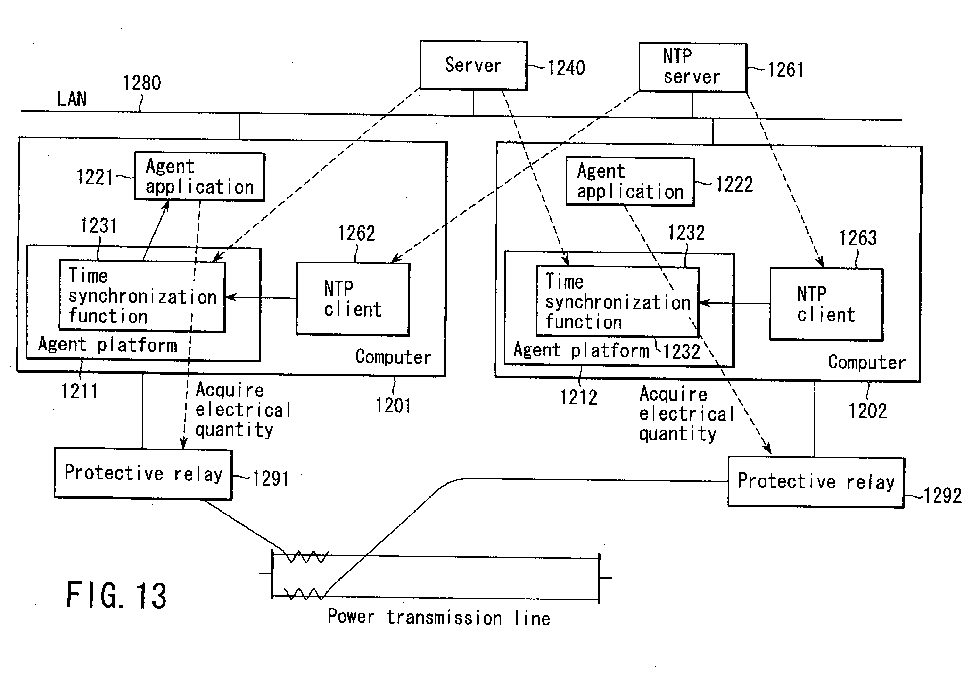

FIG. 13 is a view of a system configuration according to the 11th embodiment of the present invention.

The purpose of the system according to the 11th embodiment is also the same as that of the system shown in FIG. 9. The same reference numerals as in FIG. 9 denote the same components in FIG. 13, and a detailed description thereof will be omitted. The system shown in FIG. 13 is different from that in FIG. 9 in that it is not a reference time providing apparatus but an NTP (Network Time Protocol) client 1262 that synchronizes with a time synchronization function 1231, it is an NTP client 1263 that synchronizes with a time synchronization function 1232, and an NTP server 1261 connected to these NTP clients operates. NTP is a time adjustment method using a standard protocol in the fields of Internet. The specifications of NTP are defined in RFC (Request For Comment)-1305 as a standard in the fields of Internet.

In the above configuration, the time synchronization function 1231 inquires of the NTP client 1262 about time to adjust the time of its own. Upon receiving the inquiry, the NTP client 1262 acquires the reference time from the NTP server 1261 and returns the reference time to the time synchronization function 1231 whereby the time synchronization function 1231 adjusts itself to the reference time. This also applies to the time synchronization function 1232.

As in FIG. 8, processing is started by setting the processing start time and notifying the object agent of the event. According to this configuration, since both the time synchronization functions 1231 and 1232 are adjusted to the reference time, agents 1221 and 1222 can start processing at the same time.

According to the 11th embodiment, a plurality of agents on individual computers can simultaneously execute processing at the designated reference time at a low cost and an accuracy similar to that of the system using GPS shown in FIG. 9.

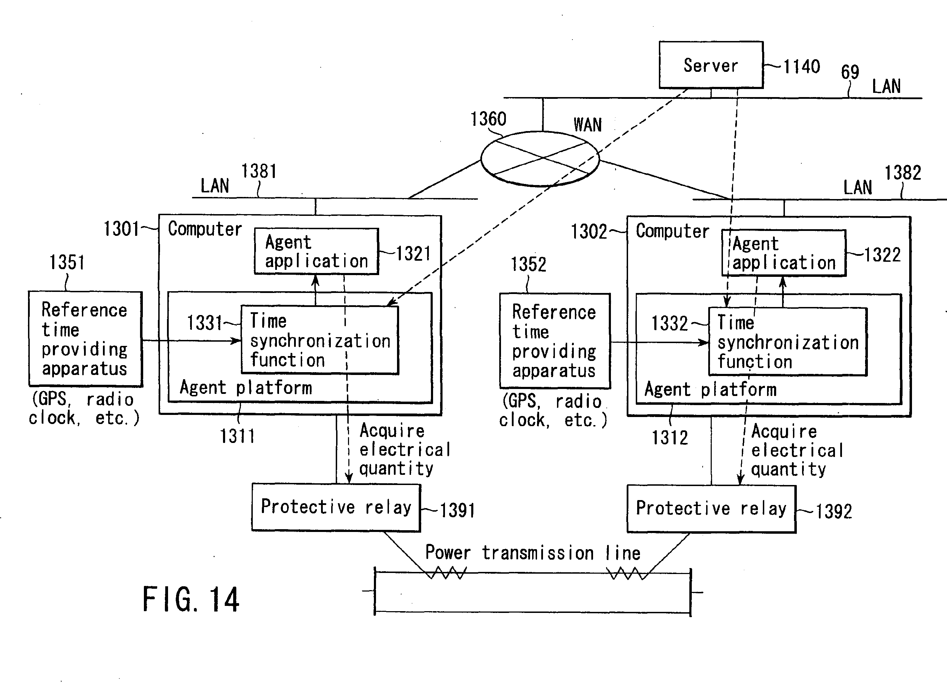

FIG. 14 is a view of a system configuration according to the 12th embodiment of the present invention.

The purpose of the system according to the 12th embodiment is also similar to that of the system shown in FIG. 9, though FIG. 14 is different from FIG. 9 in that protection relays are physically located far apart. The same reference numerals as in FIG. 9 denote the same components in FIG. 14, and a detailed description thereof will be omitted. The system shown in FIG. 14 is different from that in FIG. 9 in that a computer 1302 is connected to a LAN 1382 connected to a LAN 1381 through a WAN 1306 (e.g., a public communication network), and an agent application 1322 and a platform 1312 having a time synchronization function 1332 synchronous with a reference time providing apparatus 1352 run on the computer 1302.

As in FIG. 8, processing is started by setting the processing start time and notifying the object agent of the event. According to this configuration, since all the time synchronization functions 1331 and 1332 are adjusted to the same reference time, agents 1321 and 1322 can start processing at the same time.

According to the 12th embodiment, even when a plurality of agents are present on computers located far apart, such as computers connected through a public communication network, processes can be simultaneously executed at the same time.

The 13th embodiment is a system using a GPS as a reference time providing apparatus in the configuration shown in FIG. 14.

In the 13th embodiment as well, processing is started by setting the processing start time and notifying the object agent of the event, as in FIG. 8. According to this configuration, since all time synchronization functions 1331 and 1332 are adjusted to the same reference time, agents 1321 and 1322 can start processing at the same time.

According to the 13th embodiment, a plurality of agents on computers located far apart, such as computers connected through a public communication network, can simultaneously execute processing at the designated reference time. In the configuration using GPS, a very high time accuracy can be realized even between remote places.

Referring to FIG. 14, a system using not a GPS but a radio control clock may be employed as the 14th embodiment. A radio control clock is an apparatus which always acquires accurate time by receiving a radio wave originated from the Communication Research Laboratory in the Ministry of General Affairs and can realize an accuracy on the order of msec to µ sec.

In the 14th embodiment as well, processing is started by setting the processing start time and notifying the object agent of the event, as in FIG. 8. According to this configuration, since all time synchronization functions 1331 and 1332 are adjusted to the same reference time, agents 1321 and 1322 can start processing at the same time.

According to the 14th embodiment, a plurality of agents on computers located far apart, such as computers connected through a public communication network, can simultaneously execute processing at the designated reference time at a relatively low cost and an accuracy similar to that of the system using GPS according to the 13th embodiment.

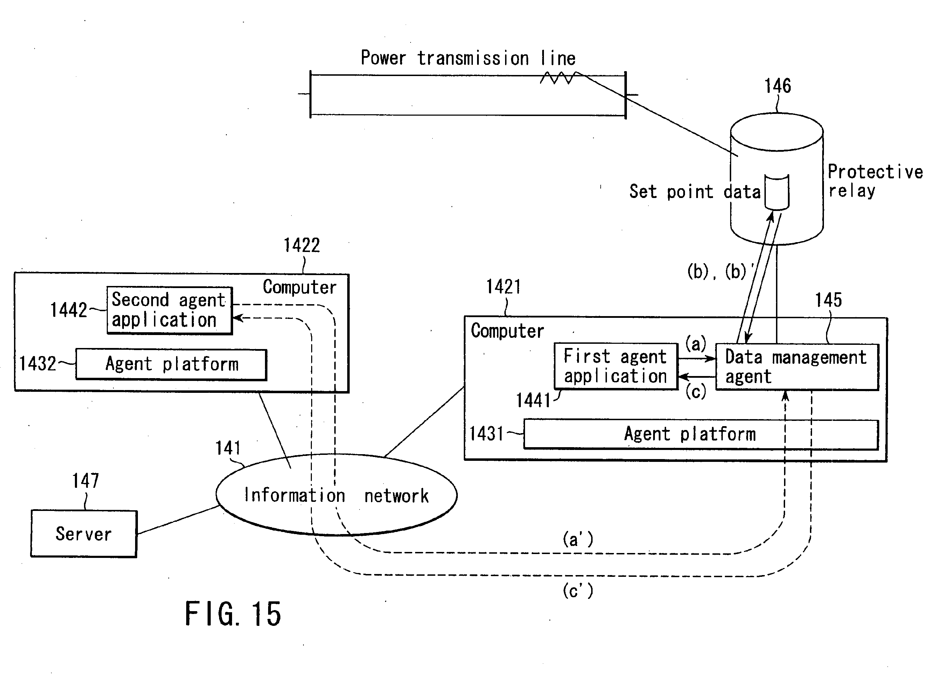

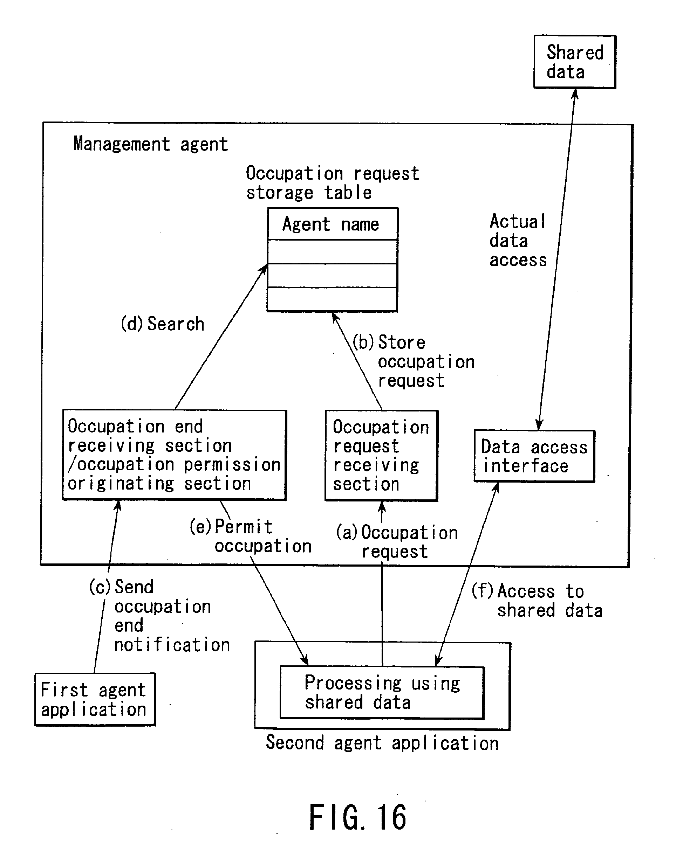

FIG. 15 is a view showing the configuration of an agent system according to the 15th embodiment of the present invention. FIG. 16 is a view for explaining the functions of a management agent shown in FIG. 15. Even in the 15th embodiment, the basic configuration of the agent system is the same as in the first embodiment.

FIG. 15 shows an example in which a management agent manages the setting value of a protection relay 146. Referring to FIG. 15, the protection relay 146 is accessed by agent applications present in a plurality of nodes connected to an information network 141 so that the setting value is read or written. In this embodiment, as shown in FIG. 15, a management agent 145 having functions shown in FIG. 16 is resident on an agent platform 1431 of a specific computer 1421 so as to consistently manage access from a first agent application 1441 in the computer 1421 and a second agent application 1442 in a computer 1422 to the protection relay 146. The management agent has the following configuration.
(1) Occupation Request Receiving Section (This section receives a shared data occupation request sent from an agent application (a) and stores the request in an occupation request storage table to be described next (b)).
(2) Occupation Request Storage Table (This table stores an occupation request for shared data managed by the management agent).
(3) Occupation End Receiving Section/Occupation Permission Originating Section (Upon receiving occupation end information sent from the agent application that occupies the shared data (c), the occupation end receiving section/occupation permission originating section extracts one occupation request from the occupation request storage table (d) and notifies the agent application that has sent the request of occupation permission (e)).
(4) Data Access Interface (The agent application that has received the occupation permission accesses the shared data through this interface (f)).

For example, the first agent application sent from a server 147 to the computer 1421 that manages the protection relay 146 transfers, to the management agent 145, "name of data", "write/read processing", and "parameters necessary for write/read". The management agent 145 executes data access to the protection relay 146. Alternatively, the second agent application 1442 present in the computer 1422 different from the computer 1421 sends a message to the management agent 145. The management agent 145 executes data access processing to the protection relay 146 upon receiving the message and returns a result to the second agent application 1442 as a message.

In write access to the protection relay 146, the management agent 145 sets protection for data to inhibit access from another device (occupation) and cancels the protection when the write processing is ended (end of occupation). In read access, however, no protection is set so that read access from another device is possible, unlike the write access.

As described above, when the setting value of the protection relay 146 is unitarily managed by the management agent 145, exclusive data access processing can easily and properly be executed.

Assume that when the first agent application 1441 is going to access the setting value data of the protection relay 146 ((a) in FIG. 15), another agent, e.g., the second agent application 1442 is already accessing the setting value data of the protection relay 146 through the management agent 145 (a)', (b)', and the management agent 1442 has set protection for the setting value data. In this case, the first agent application cannot access the setting value data. At this time, the first agent application requests the management agent 145 to send a message when protection is canceled (a), and proceeds to execute another processing. Upon receiving, from the management agent 145, a message (c) indicating that the protection is canceled, the first agent application accesses the setting value data of the protection relay 146 (b).

The second agent application that is present on a computer, e.g., the computer 1442 different from that of the management agent 145 can also receive the same service as described above.

As described above, when protection for the setting value data of the protection relay 146 is canceled, a message representing it can be received from the management agent 145. Since processing independently of the processing using the setting value data can be executed first, the processing efficiency of the agent increases. Simultaneously, when a plurality of accesses occur during protection, and the protection is canceled later, a message representing the cancel of protection is transmitted to the access requesting sources in the chronological order of accesses or in descending order of access request priorities (if the priority can be set at the time of request).

If processing needs to be executed when the setting value of the protection relay is rewritten (for example, to notify the server of the change in setting value), the first agent application 1441 registers in the management agent 145 that "processing is executed when the setting value is rewritten" (a). Accordingly, when the setting value of the protection relay 146 is rewritten, the management agent 145 sends a message (c) indicating that "the setting value is rewritten" to the first agent application 1441. Upon receiving this message, the first agent application 1441 requests the management agent 146 to read the setting value (a) and receives the rewritten setting value (b) from the protection relay 146 through the management agent 146 (c). The second agent application 1442 that is present on a computer, e.g., the computer 1442 different from that of the management agent 145 can also receive the same service as described above.

If this setting value rewrite notification system is not present, the first agent application 1441 must poll the protection relay 146 at an appropriate timing (for example, at a predetermined period) to detect whether the value of the setting value is rewritten. The setting value rewrite notification system makes the polling processing unnecessary and increases the processing efficiency of each agent.

For the agent system according to the 15th embodiment, a management function having the same functions as described above may be added to the agent platform in place of the management agent in FIG. 15. Even in this case, the same functions and effects as in the configuration having the management agent arranged on the agent platform can be obtained.

In this system, a case is sometimes likely to occur in which the agent application may interrupt processing until a notification is received from the management agent or management function and resume processing after receiving the notification. In this case as well, processing for it need not be realized by the agent application. Hence, the processing by the agent application is simplified.

In this system, the management agent manages shared data. When the computer 1421 has, for example, a function of acquiring the information of the protection relay 146 in real time and providing the information to an external device, the management agent may manage the shared function.

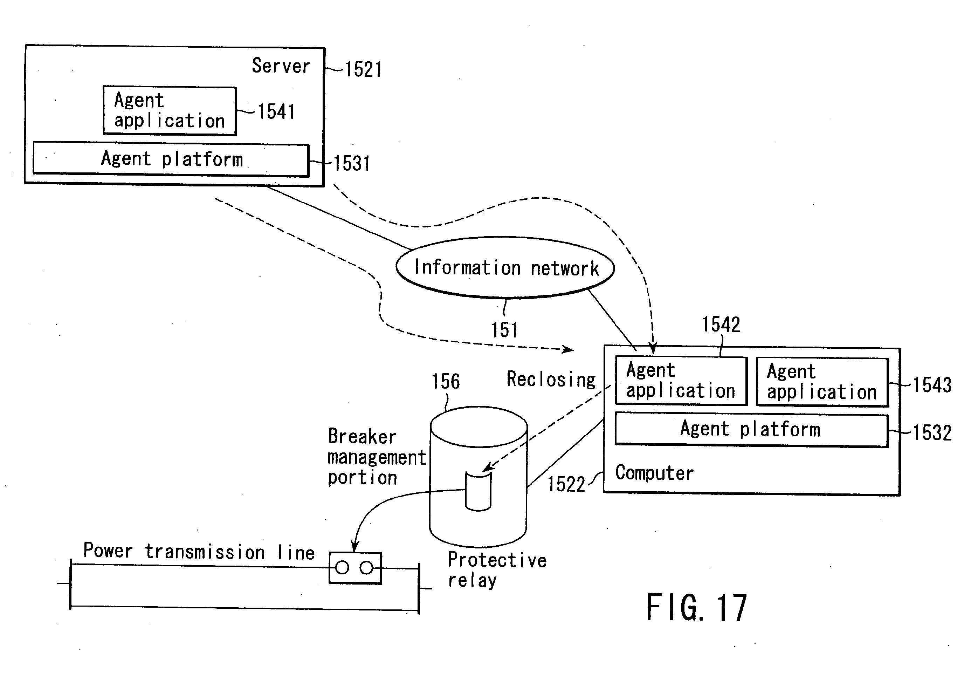

FIG. 17 is a view showing the configuration of an agent system according to the 16th embodiment of the present invention. Even in the 16th embodiment, the basic configuration of the agent system is the same as in the first embodiment. This system aims at sending an agent application for canceling the open state of a protection relay from a server 155 to a computer 152 and reclosing the protection relay.

In the 16th embodiment, when a given agent application is to be sent to a computer far apart in the agent system, the agent application is prevented from erroneously performing operation unwanted by the agent sender.

More specifically, to more reliably transmit an agent application that may cause a serious problem according to the processing result, a plurality of copy agent applications are generated before the agent application arranged in a certain computer is moved to another computer through the information network. The plurality of agent applications are moved through a plurality of paths on the information network. Another computer determines the propriety of each agent application on the basis of its arrival situation and then executes processing.

As shown in FIG. 17, an agent application 1541 arranged in the server 1521 is moved to the computer 1522 through an information network 151 and caused to perform processing in the computer 1522. In this case, a plurality of agent applications are generated including copies and sent to the target computer 1522 through different paths on the information network 151. Path assignment is executed by, e.g., the server 1521. Simultaneously, the computer 1522 is notified of the number of agents transmitted from the server 1521.

An agent platform 1532 of the computer 1522 does not permit to start processing when one agent application has arrived. When all the agent applications sent from the server 1521 have arrived, the agent platform 1532 causes a representative agent application to start processing (reclosing). Note that the remaining copy agent applications are discarded.

Instead of starting processing when all the agent applications sent from the server 1521 have arrived at the computer 1522, processing may be started when half of the agent applications have arrived (more than half of agent applications have arrived). Alternatively, processing may be permitted on the basis of not only the number of arriving agent applications but also whether all or more than half of the arriving agent applications have the same contents.

Accordingly, even when information on a certain path is rewritten due to an fault or security breakthrough, the probability that the agent application has processing contents that are unwanted by the agent application sender is lower than that when processing is executed by sending only one agent application because a plurality of agent applications having the same contents are generated and moved through different paths.

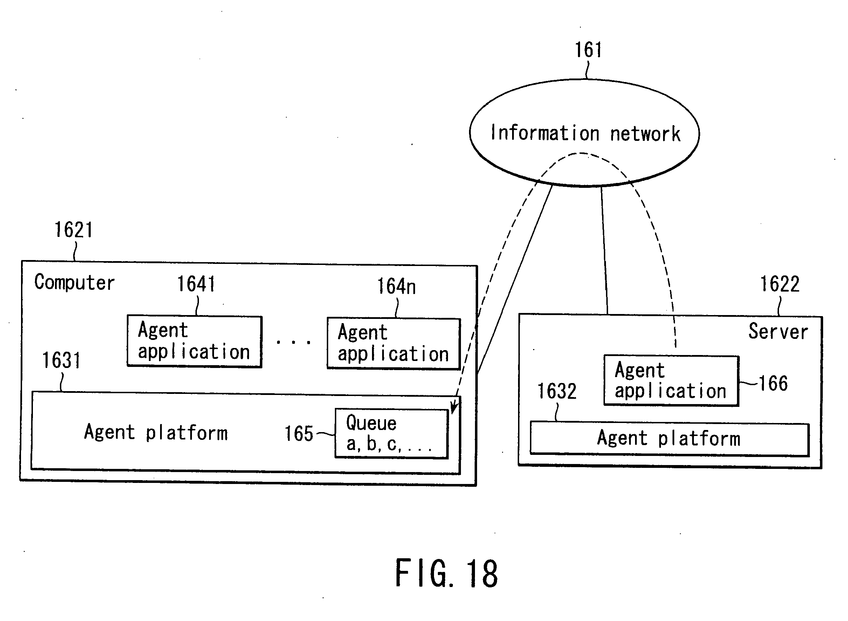

FIG. 18 is a view showing the configuration of an agent system according to the 17th embodiment of the present invention. Even in the 17th embodiment, the basic configuration of the agent system is the same as in the first embodiment. FIG. 18 is a view for explaining the processing method when a number of agent applications arrive at a specific computer. In the 17th embodiment, a new function of limiting the number of agents to be simultaneously received to a predetermined number or less is added to the agent platform. This function is particularly effective when, in the agent system according to each of the above embodiments, a computer serving as the interface between a protection relay and an information network is a built-in computer with a low processing speed.

Referring to FIG. 18, a number of agent applications from a computer 1622 may arrive at another computer 1621. In this case, if all the arriving agent applications are received and run, the load on the agent platform, such as memory consumption, becomes very large, resulting in low processing speed of each agent application. To prevent this, the maximum number of agent applications receivable by the agent platform is registered in the platform in advance. When the number of agents exceeds the maximum number, agent reception is rejected.

As shown in FIG. 18, it is made possible to set the number of simultaneously receivable agent applications as, e.g., n in an agent platform 1631 of the computer 1621. When the number of agents exceeds the number n, reception is limited.

As described above, the maximum number n of agents receivable by the agent platform 1631 is registered. When the number of agents exceeds the number n, reception is rejected. Since the maximum number of agent applications to be simultaneously run is limited, the processing efficiency of each agent application in that computer increases.

In addition, a queue 165 for agents that are waiting for reception is prepared in the agent platform 1631. When the agent platform 1631 has received the maximum number n of agent applications, any new agent applications including, e.g., an agent application 166 moved from the computer 1622, are not received. The agent applications (a), (b), (c), ··· which are not received wait in the queue 165. When some of agent applications 1 to n that are received and running move or disappear, the agent platform 1631, e.g., sequentially receives predetermined agent applications from the queue 165 and makes them processable. The queue 165 is prepared on, e.g., the memory of the computer or on an external storage device.

In this way, the number of agent applications to be simultaneously received is limited to n. If agent applications more than n are sent, they are added to the queue 165. Conversely, when an agent application completes processing in the computer and moves to another computer or disappears, the agent platform receives the first agent application in the queue 165 and causes the agent application to start processing.

Hence, when agent applications are put into the queue 165 instead of causing the agent platform 1631 to receive them, the processing efficiency of each agent application in the computer can be increased while reducing the overhead for movement of the agent applications.

Alternatively, a function of managing priority is added to the agent platform, and priority is set for each agent. When the agent platform 1631 has received the maximum number n of agents, the order of agent applications in the queue 165 is determined in accordance with the priority order of the respective agent applications when they are put into the queue 165.

When the agent platform 1631 has the function of changing the order of agent applications in the queue in accordance with the priority order instead of arranging them as put into the queue 165, the order of agent applications in the queue is changed in accordance with the priority order. Since an agent application with higher priority can be received by the agent platform soon, the wait time of important processing can be shortened.

Instead of setting the order of agent applications in the queue in accordance with the priority, if the agent platform 1631 has received the maximum number n of agent applications, and an agent application that has arrived later has priority higher than that of any one of the n currently running agent applications, the agent application with higher priority may be preferentially run by moving to the queue 165 the lowest-priority agent application in the agent applications that is running and receiving the agent application with higher priority

In this way, the function of, when the maximum number n of agent applications are running in the computer 1621, and an agent application having priority higher than that of any one of the running agent applications has arrived, moving to the queue 165 the lowest-priority agent application that is running and causing the agent application with higher priority to execute processing is added to the agent platform 1631. Accordingly, since the agent application with higher priority is preferentially received by the agent platform, the wait time in the queue is further shortened.

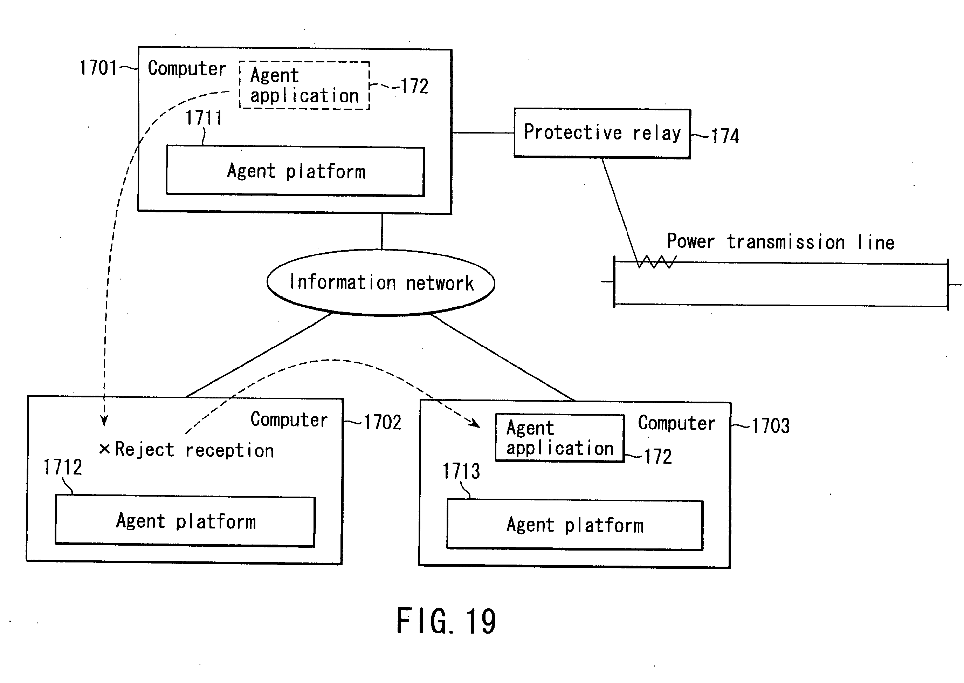

FIG. 19 is a view showing the configuration of an agent system according to the 18th embodiment of the present invention. Even in the 18th embodiment, the basic configuration of the agent system is the same as in the first embodiment. FIG. 19 is a view for explaining the processing method when reception of an agent is decided by causing an agent platform to determine the function and characteristic of the agent received by the agent platform itself. In FIG. 19, a new function of determining the function and performance of an agent received by the agent platform itself is added to the agent platform. The system shown in FIG. 19 aims at causing an agent application 172 to acquire the informant of a protection relay 174 and calculate the setting value of the protection relay 174 on the basis of the information. In this embodiment, the function and performance to be determined by the platform means computer resources (e.g., the speed of the CPU and the required memory capacity) necessary for the agent to execute processing.

The agent application 172 acquires the information of the protection relay 174 and then calculates the setting value on the basis of the information. Assume that since a computer 1701 in which the agent application is currently present has low processing performance, the agent application 172 should move to another computer and then calculate the setting value. It is supposed to be normal that the agent application has potential moving destinations in advance. However, if computers where agent applications are to be processed have no restrictions, the platform may decide the moving destination.

The platform on which the agent application executes calculation permits reception of the agent application (calculation of the setting value) on the basis of the performance of the platform itself. For example, referring to FIG. 19, a platform 1712 that the agent application has visited first to calculate the setting value rejects reception of the agent application 172 because a computer 1702 has no sufficient processing performance for setting value calculation. The rejected agent application 172 moves to a platform 1713 as the next candidate for setting value calculation. The platform 1713 permits reception of the agent application 172, i.e., calculation of the setting value because the processing performance of a computer 1703 is high.

A conventional platform that has no such function may execute complex processing even when its computer has low performance. As a result, the computer may become a bottleneck in the entire system, resulting in degradation in the system performance.

When each platform has the function of determining reception of an agent, as in this system, the load on the entire system can be distributed. Hence, the processing efficiency of the entire system increases.

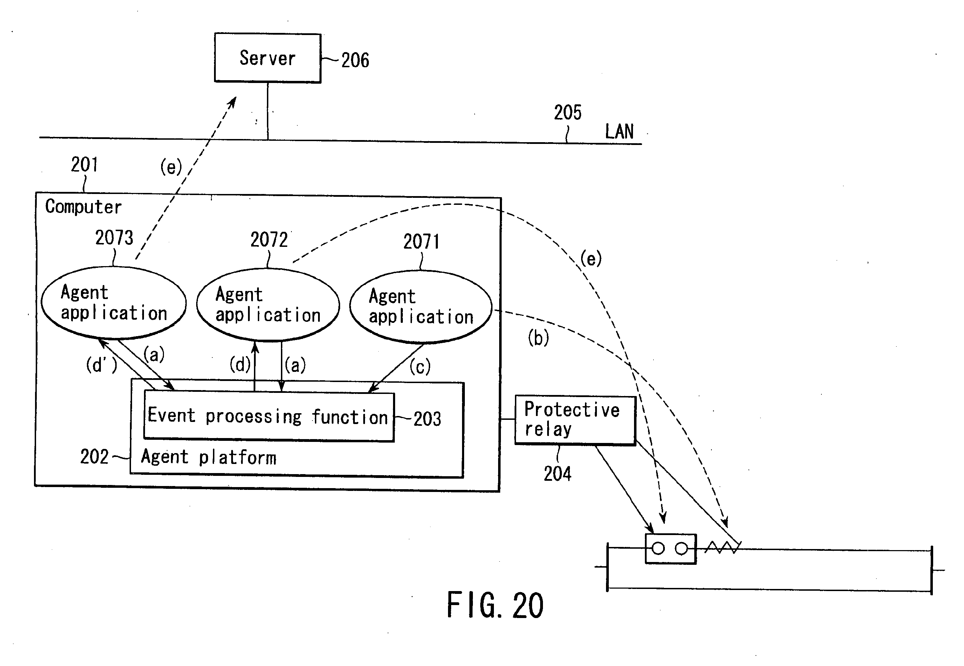

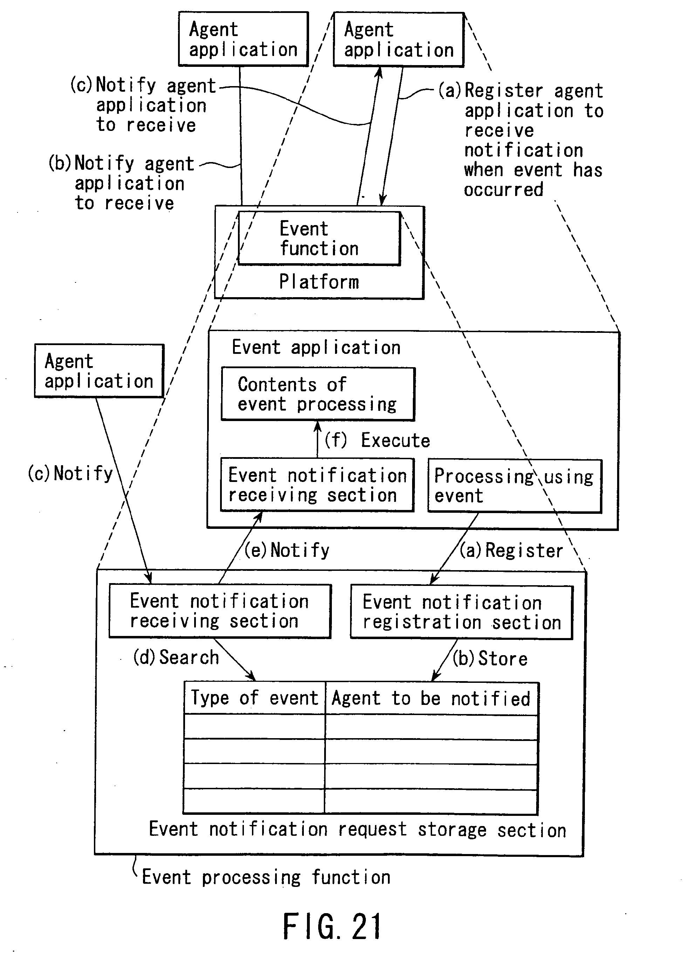

FIG. 20 is a view of a system configuration according to the 19th embodiment of the present invention. FIG. 21 is a view for explaining the event processing function in FIG. 20. FIG. 20 is a view showing a system which always monitors the state of a system and, if an fault has occurred, notifies the control center of the fault and also opens the power system.

Referring to FIG. 20, a computer 201 is connected to a LAN 202. A platform 202 serving as a program for receiving an agent is running. The platform 202 incorporates an event processing function 203 of, upon receiving a report about occurrence of an event, notifying an agent registered in advance of it. FIG. 21 is a view showing the internal functions of the event processing function 203. The event processing function has the following functions.
(1) Event Notification Receiving Section (Upon receiving an event notification request from an agent application (a), this section stores the request in an event notification request storage section to be described next (b)).
(2) Event Notification Request Storage Section (An area where the request from the agent application is stored).
(3) Event Receiving/Notifying Section (This section receives occurrence of an event (c), simultaneously searches the event notification request storage section (d), and sends an event occurrence notification to an agent application which is registered in advance to be notified of the event (e)).

A protection relay 204 is connected to the computer 201. Electrical quantity acquisition and opening the power system can be done through the protection relay 204.

An agent application 2071 which always monitors the electrical quantity and, if an fault is detected, notifies another agent application of the event through the event processing function, an agent application 2072 which disconnects the system upon receiving the event occurrence notification, and an agent application 2073 which notifies a server 206 at the control center of the fault upon receiving the event occurrence notification are sent from the server 206 to the platform 202. The agent applications 2072 and 2073 have the functions shown in FIG. 21. That is:
(1) Event Notification Receiving Section (Upon receiving the event occurrence from the event processing function (e), this section executes the following processing (f)).
(2) Contents of Event Processing

The agent applications 2072 and 2073 register themselves in the event processing function to receive an event notification when an event, i.e., an fault in the power system has occurred (a and a' in FIG. 20). On the other hand, when arrived at the platform 202, the agent application 2071 monitors the electrical quantity of the system through the protection relay 204 (b). If an fault is detected, the agent application 2071 notifies the event processing function 203 of it (c). Upon receiving the report of the event; the event processing function 203 notifies the agent applications 2072 and 2073 registered in advance of the event occurrence (d and d'). Upon receiving the event occurrence notification, the agent application 2072 disconnects the power system as predetermined processing (e). Similarly, upon receiving the event occurrence notification, the agent application 2073 also notifies the server of it as predetermined processing (e').

According to the 19th embodiment, various kinds of events can be systematically managed using the event processing function. When this embodiment is applied to an power system, an application program can independently create an fault detection function and relay operating function. Hence, various functions can easily be implemented.

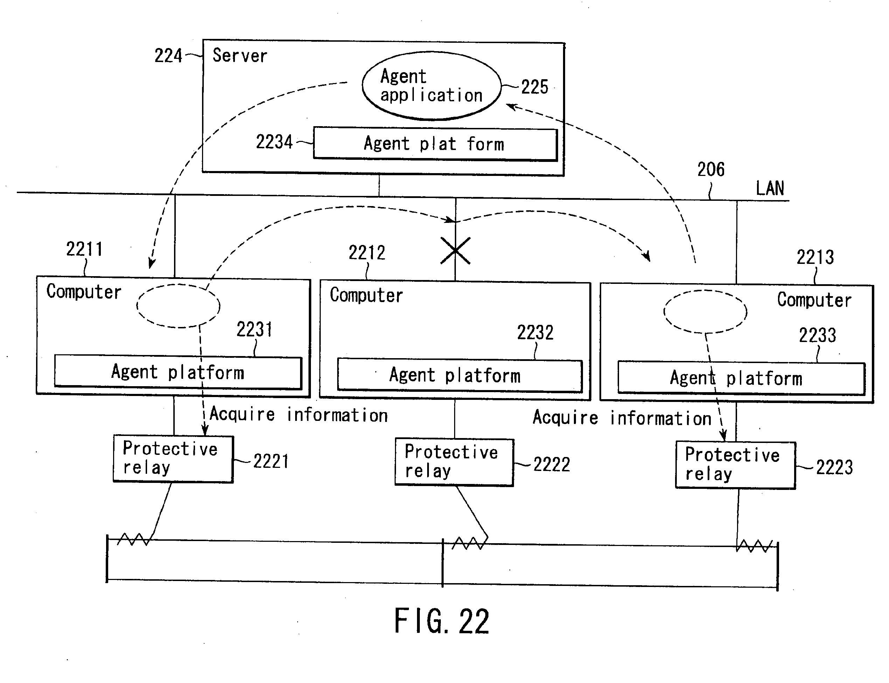

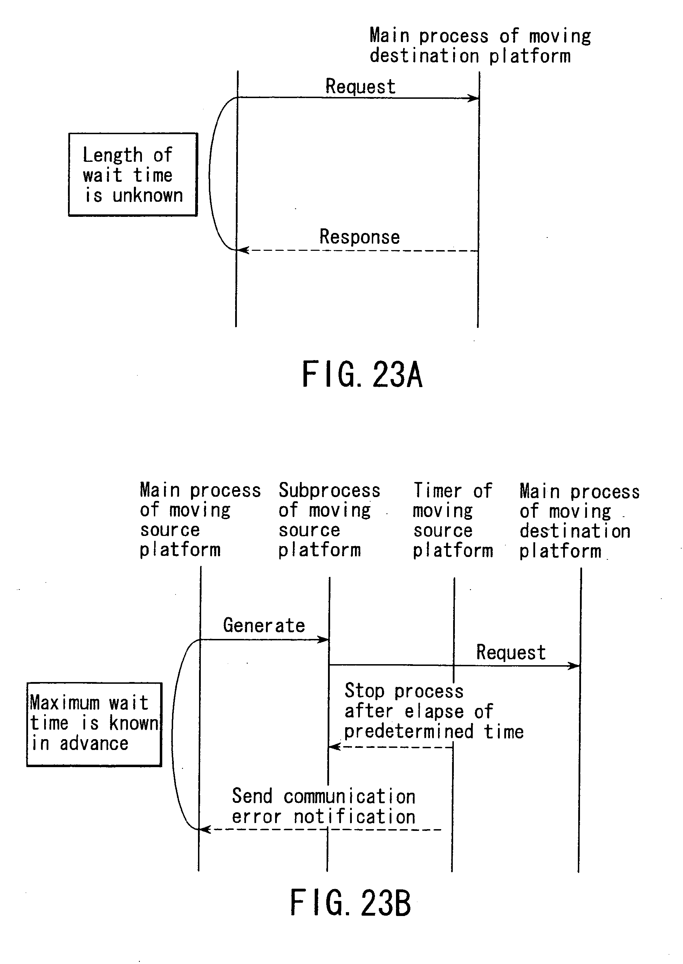

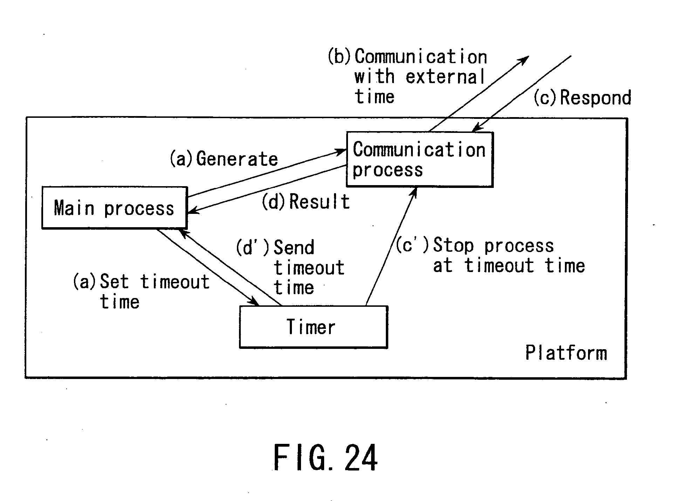

FIG. 22 is a view of a system configuration according to the 20th embodiment of the present invention. FIGS. 23A and 23B are views for explaining the difference from a conventional platform. FIG. 24 is a view for explaining the functions that the platform has to implement the functions of the present invention. FIG. 22 shows a system which quickly specifies the cause of an fault that has occurred in the system.

Referring to FIG. 22, computers 2211, 2212, and 2213 and a server 224 are connected to a LAN 226. Platforms 2231, 2232, 2233, and 2234 serving as programs for receiving agents run in the computers 2211, 2212, and 2213, respectively. The computers 2211, 2212, and 2213 can acquire the information of corresponding protection relays 2221, 2222, and 2223, respectively. An agent application 225 has a function of collecting the information of the protection relays connected to the platforms.

In the conventional system (FIG. 23A), when an agent is moving between platforms, and an fault has occurred in the node where the moving destination platform is running, the moving source node continuously waits for a response from the moving destination node.

To the contrary, in the present invention (FIG. 23B), a function that allows timeout of communication processing such as movement is prepared, thereby guaranteeing the time required for movement of an agent.

The operation of this system will be described next. At the time of an fault, the server 224 sends the agent application 225 and specifies the cause of the fault on the basis of information that the agent application 225 has brought. This agent application goes round through the platforms 2231, 2232, and 2233 in this order. An instruction is given to the agent application in advance to make it skip any destination that the agent application cannot reach. The agent application 225 that has arrived at the platform 2231 first acquires the information of the protection relay 2221. The platform 2231 is going to move the agent application 225 to the platform 2232. Assume that the path to the computer 2212 is disconnected.

In the 20th embodiment, communication by a platform has a timeout time. Communication that gives no response even when the time has been out is determined as a failure. Processing corresponding to the failure is executed. FIG. 24 explains the function for implementing this function. In the 20th embodiment, the platform has the following functions.
(1) Main Process (The function of a conventional platform. However, if communication with an external device is required to, e.g., move an agent, the function generates the following communication process instead of executing communication by itself (a)).
(2) Communication Process (This process is generated by the main process (a) to actually communicate with an external device (b)).
(3) Timer (When the main process generates a new communication process, the main process sets a timeout time in the timer (a). At the timeout time, the communication process is stopped (c). The main process is notified of the timeout (d')).

In the system according to the 20th embodiment, the main process that has received the timeout notification moves the agent application 225 to the next destination, i.e., the platform 2233. With this operation, the agent application 225 does not waste the wait time.

According to the 20th embodiment, the result of communication performed by the platform, e.g., movement of an agent, can be obtained within a predetermined time. The present invention is particularly effective when the agent is applied to a system that requires quick processing, like an power system protection system.

According to the present invention, the following effects are obtained.
(1) An agent system having a plurality of agents each of which executes predetermined processing while moving through a plurality of nodes connected to an information network is characterized in that the plurality of nodes respectively have a plurality of agent platforms which receive and execute the agents, one of the agent platform and the node has synchronization means, and when the plurality of agents which are running on the same node should synchronously execute operation, the plurality of agents on the same node execute processing synchronously by sending a synchronization request message to the synchronization means. A synchronization agent or synchronization function for establishing synchronization between the plurality of agents is arranged in the agent platform of the node (computer). An agent to be synchronized sends a message to the synchronization agent or the like and waits for a reply whereby the plurality of agents are synchronized. In the conventional scheme, the agent itself must have a mechanism for synchronization with another agent. In the present invention, since the synchronization agent or the like is introduced, the agent only needs to request the synchronization agent to execute synchronization processing. That is, when the synchronization agent or synchronization function is introduced, the agent only needs to have a notification method for the other agent to be synchronized and the synchronization agent. With this configuration, the programming amount of the agent is reduced. In addition, bugs in the synchronization program can be prevented.
(2) An agent system characterized by comprising:
   a plurality of agents each of which executes predetermined processing while moving through a plurality of nodes connected to an information network; and
   synchronization means arranged in the information network, wherein the plurality of nodes respectively have a plurality of agent platforms which receive and execute the agents, and when the plurality of agents which should synchronously execute operation are running on different nodes, the plurality of agents on the different nodes synchronously execute processing by sending a synchronization request message to the synchronization means. A synchronization agent or synchronization mechanism is arranged in the information network (e.g., a server). The synchronization agent or synchronization mechanism has a function of establishing synchronization with an agent on another node (computer). For this reason, it is easy to establish synchronization between agent applications present on different nodes (computers).
(3) An agent system having a plurality of agents each of which executes predetermined processing while moving through a plurality of nodes connected to an information network is characterized in that the plurality of nodes respectively have a plurality of agent platforms which receive and execute the agents, one of the agent platform and the node has synchronization means, and when the plurality of agents which should synchronously execute operation are running on different nodes, the agents to be synchronized send a synchronization request message to the synchronization means in the same node, and the synchronization means sends the synchronization request message to the synchronization means in another node, and the plurality of agents on the different nodes synchronously execute processing. To make synchronization between agents present on different nodes (computers), the synchronization agents or synchronization functions in the respective computers exchange synchronization information. Hence, synchronization can easily be established only by sending a message to the synchronization agent or function that is resident in the same computer without being conscious of, e.g., the positions of computers where the agents are present.
(4) An agent system having a plurality of agents each of which executes predetermined processing while moving through a plurality of nodes connected to an information network is characterized in that the plurality of nodes respectively have a plurality of agent platforms which receive and execute the agents, each of the plurality of platforms has a time synchronization function which controls a processing execution time of the agent, and each of the plurality of nodes has an apparatus which provides a reference time to the time synchronization function. In the conventional scheme, when the plurality of agents present on individual computers are to execute processing at the same time, each agent itself must have a mechanism for time synchronization with the remaining agents. However, according to the present invention, the agent only needs to use the time synchronization function prepared in the agent platform in advance. Accordingly, the programming amount of the agent and the number of bugs can be reduced. That is, when time synchronization processing in which the plurality of agents execute processing at the same time should be executed, it is only necessary to use the time synchronization function prepared in each agent platform in advance. Hence, time synchronization can easily be established without preparing, in each agent, a mechanism for time synchronization with the remaining agents.
(5) The system of (4) is characterized in that a GPS is used as the reference time providing apparatus. When time synchronization processing in which the plurality of agents execute processing at the same time should be executed, it is only necessary to use the time synchronization function prepared in each agent platform in advance. Since the time synchronization function synchronizes with the GPS, accurate time synchronization can easily be established without preparing, in each agent, a mechanism for time synchronization with the remaining agents.
(6) An agent system having a plurality of agents each of which executes predetermined processing while moving through a plurality of nodes connected to an information network is characterized in that the plurality of nodes respectively have a plurality of agent platforms which receive and execute the agents, a time synchronization function which is arranged in the platform to control an execution time of the agent, a time synchronization server which provides a reference time to each node in the system, and a time synchronization client which provides, to time synchronization function, the reference time provided by the time synchronization server. When time synchronization processing in which the plurality of agents execute processing at the same time should be executed, it is only necessary to use the time synchronization function prepared in each agent platform in advance. Since the time synchronization functions time-synchronize with each other through the time synchronization server and time synchronization client, accurate time synchronization can easily be realized at a relatively low cost without preparing, in each agent, a mechanism for time synchronization with the remaining agents.
(7) The system of (6) is characterized in that the time synchronization server of the agent system is operated on a dedicated computer on a network connected by a communication network. When time synchronization processing in which the plurality of agents execute processing at the same time should be executed, it is only necessary to use the time synchronization function prepared in each agent platform in advance. Since the time synchronization functions time-synchronize with each other through the time synchronization client whose time is adjusted by the time synchronization server, accurate time synchronization can easily be realized at a relatively low cost without preparing, in each agent, a mechanism for time synchronization with the remaining agents.
(8) The system of (7) is characterized in that an NTP (Network Time Protocol) server is used as the time synchronization server, and an NTP client is used as the time synchronization client. When time synchronization processing in which the plurality of agents execute processing at the same time should be executed, it is only necessary to use the time synchronization function prepared in each agent platform in advance. Since the time synchronization functions time-synchronize with each other through the NTP client, accurate time synchronization can easily be realized at a relatively low cost without preparing, in each agent, a mechanism for time synchronization with the remaining agents.
(9) A system of (4) is characterized in that time synchronization to a remote site connected through a communication line is established. When time synchronization processing in which the plurality of agents on computers in remote sites execute processing at the same time should be executed, it is only necessary to use the time synchronization function prepared in each agent platform in advance. Time synchronization can easily be established without preparing, in each agent, a mechanism for time synchronization with the remaining agents.
(10) A system of (5) is characterized in that time synchronization to a remote site connected through a communication line is established. When time synchronization processing in which the plurality of agents on computers in remote sites, e.g., computers connected through a public communication network, execute processing at the same time should be executed, it is only necessary to use the time synchronization function which is prepared in each agent platform in advance and synchronizes with the GPS. Accurate time synchronization can easily be realized without preparing, in each agent, a mechanism for time synchronization with the remaining agents.
(11) A system of (4) is characterized in that a radio control clock is used as the reference time providing apparatus. When time synchronization processing in which the plurality of agents on computers in remote sites, e.g., computers connected through a public communication network, execute processing at the same time should be executed, it is only necessary to use the time synchronization function which is prepared in each agent platform in advance and synchronizes with the radio control clock. Accurate time synchronization can easily be realized at a relatively low cost without preparing, in each agent, a mechanism for time synchronization with the remaining agents.
(12) An agent system having a plurality of agents each of which executes predetermined processing by accessing shared data present on a predetermined node or using a shared function provided by a predetermined node while moving through a plurality of nodes connected to an information network is characterized in that the plurality of nodes respectively have a plurality of agent platforms which receive and execute the agents, and one of the agent platform and the node has management means only through which the shared data or shared function can be accessed. A share management agent which manages data or a function used by a plurality of agents is introduced. The management agent consistently manages a shared resource such that the shared data or function is accessed only through this agent. With this configuration, excluding processing of access can easily and accurately be executed.
(13) The system of (12) is characterized in that the management means has a function of setting protection against another access when data or function managed by the management means is being used, and notifying the agent that has accessed the data or the function during protection of that the data or function is accessible after canceling the protection. Upon detecting access to protected data or function, when the protection is canceled, the share management agent notifies the agent that has accessed that the protection is canceled. Since the agent can execute processing irrelevant to the shared data processing or shared function first, the processing efficiency of the agent increases.
(14) The system of (12) is characterized in that each agent registers, in the management means in advance, to receive a notification when the shared data is partially rewritten or a predetermined function of the shared function is invoked, and when the shared data is actually rewritten, or the function is actually invoked, a notification is sent. When the data is actually rewritten or when the shared function is actually used, a notification is sent from the management agent. For this reason, the agent itself need not execute polling processing to confirm whether the data value is rewritten or the shared function is used. Hence, the processing efficiency of the agent increases.
(15) The system of (13) or (14) is characterized in that each agent interrupts processing until the notification is received from the management means, and resumes the processing after the notification is received. When the processing of the agent is determined in consideration of a change in state of shared data or use of the shared function, the management agent or management function resumes the processing of the agent when the data is actually rewritten or when the shared function is actually used. For this reason, the agent itself need not execute polling processing to confirm whether the state of the shared data has changed or the shared function is used. Hence, the processing efficiency of the agent increases.
(16) An agent system having a plurality of agents each of which executes predetermined processing while moving through a plurality of nodes connected to an information network is characterized in that when the agent is to be moved from one node to another node, a plurality of copies of the agent are generated, the plurality of generated agents are moved to the moving destination node through different paths on the information network, and desired processing is started on the moving destination node after all the agents have arrived or a majority of the agents have arrived. A plurality of agents are generated, and processing is started when all (or a majority) of them have arrived at the destination. Even when the information is rewritten due to some fault or security breakthrough, the agent is very unlikely to execute processing that is not intended by the agent transmitter, as compared to a case wherein only one agent is transmitted. Hence, the reliability of the agent application increases, and the security level increases.
(17) An agent system having a plurality of agents each of which executes predetermined processing while moving through a plurality of nodes connected to an information network is characterized in that the plurality of nodes respectively have a plurality of agent platforms which receive and execute the agents, and the number of agents to be simultaneously received by one agent platform is limited to a predetermined number. The maximum number of agents receivable by an agent platform is registered in that platform. When the number of agents exceeds the maximum number, reception of agents is rejected. Since the maximum number of agent applications that simultaneously run is determined, the processing efficiency of each agent in that computer increases.
(18) The system of (17) is characterized in that each agent platform has a queue for agents that are waiting for reception, and when an agent platform has already received the maximum number of agents, an agent that is not received is put into the queue, and when an agent which is received and running moves or disappears, the agent in the queue is received by the agent platform. The queue for agents that are waiting for reception is prepared in the agent platform. The platform has a function of putting agents into the queue when agents beyond the maximum number are to be received. Since the agents are put into the queue without being received, the processing efficiency of the agent in the computer is increased while reducing the overhead for movement of the agents.
(19) The system of (18) is characterized in that priority is set for each agent, and when the agents are to be put into the queue because the destination agent platform has already received the maximum number of agents, the order of the agents in the queue is determined in accordance with the priority of each agent. The platform has a function of setting the order of agents in the queue in accordance with not the order as put into the queue but the priority of each agent. Even when an agent with higher priority is put into the queue, the order in the queue is changed in accordance with the priority. Hence, an agent with higher priority is received by the agent platform at an earlier stage. The wait time for important processing can be shortened.
(20) The system of (18) is characterized in that priority is set for each agent, and when the destination agent platform has already received the maximum number of agents, and the priority of an agent that has arrived later is higher than that of an agent that is currently running, an agent with lowest priority in the running agents is moved to the queue, and the agent with higher priority is received. The platform has a function of, when the maximum number of agents are running in the computer, and an agent with higher priority than those of the running agents has arrived, moving a running agent with lowest priority to the queue and executing the processing of the agent with higher priority. Since an agent with high priority is preferentially received by the platform, the wait time in the queue is further shortened.
(21) An agent system having a plurality of agents each of which executes predetermined processing while moving through a plurality of nodes connected to an information network is characterized in that the plurality of nodes respectively have a plurality of agent platforms which receive and execute the agents, and each platform permits/inhibits reception by determining a function and characteristic of a received agent. The platform determines the function and characteristic of a received agent and permits/inhibits reception. A platform with low processing performance rejects reception of an agent that will execute complex processing. Hence, the platform with low processing performance can be prevented from becoming a bottleneck in the entire system. As a result, the processing efficiency of the entire system increases.
(22) An agent system having a plurality of agents each of which executes predetermined processing while moving through a plurality of nodes connected to an information network is characterized in that the plurality of nodes respectively have a plurality of agent platforms which receive and execute the agents, each agent platform has an event function and, when an event has occurred, sends a message to an agent that has been registered in advance in the event function so as to cause the agent to perform operation in accordance with the event. Since various kinds of events can be consistently managed by the event processing function, applications can be independently generated for the respective functions. Hence, a system having various functions can easily be implemented.
(23) An agent system having a plurality of agents each of which executes predetermined processing while moving through a plurality of nodes connected to an information network is characterized in that the plurality of nodes respectively have a plurality of agent platforms which receive and execute the agents, when an agent platform is to move the agent to the next moving destination, communication that gives no response even after elapse of a predetermined time is forcibly disconnected. When a timeout time is set for communication processing between a desired agent platform and an external device, it is guaranteed that the processing of the agent is ended within a predetermined time. When an agent platform communicates with another program, the maximum response time can be predicted in advance. Accordingly, an agent can be applied to a system that requires quick processing, like protection system of power system.

As described above, processing which requires real-time responses in a distributed environment can easily be realized by an agent having a real time function. An application only needs to designate the timing and operation. A very large effect that the prior art does not have can be obtained.

Finally, as a unique effect obtained when the agent is applied to power system protection, an example in which the agent is applied to a failure extension protection system will be described. The power system stabilizing system is a system which controls the apparatuses of an power system, such as a power generator and breaker in case of a serious fault, thereby stabilizing the system. To stabilize the system, each of the distributed apparatuses requires delicate control for the operation order of the apparatuses, timing, and certainty. When the agent is used, this function can easily be realized. In addition, even when the configuration of the system has changed, the agent system of the present invention can easily cope with the change.

### Industrial Applicability

The present invention relates to an agent system.

According to a second aspect of the present invention there is provided an agent system characterized by comprising: a plurality of agents each of which executes predetermined processing while moving through a plurality of nodes connected to an information network; and synchronization means arranged in the information network, wherein the plurality of nodes respectively have a plurality of agent platforms which receive and execute the agents, and when the plurality of agents which should synchronously execute operation are running on different nodes, the plurality of agents on the different nodes synchronously execute processing by sending a synchronization request message to the synchronization means.

According to a third aspect of the present invention there is provided an agent system having a plurality of agents each of which executes predetermined processing while moving through a plurality of nodes connected to an information network, wherein the plurality of nodes respectively have a plurality of agent platforms which receive and execute the agents, one of the agent platform and the node has synchronization means, and when the plurality of agents which should synchronously execute operation are running on different nodes, the agents to be synchronized send a synchronization request message to the synchronization means in the same node, and the synchronization means sends the synchronization request message to the synchronization means in another node, and the plurality of agents on the different nodes synchronously execute processing.

According to a fourth aspect of the present invention there is provided an agent system having a plurality of agents each of which executes predetermined processing while moving through a plurality of nodes connected to an information network, wherein the plurality of nodes respectively have a plurality of agent platforms which receive and execute the agents, each of the plurality of platforms has a time synchronization function which controls a processing execution time of the agent, and each of the plurality of nodes has an apparatus which provides a reference time to the time synchronization function.

According to a fifth aspect of the present invention there is provided an agent system according to the fourth aspect, wherein a GPS is used as the reference time providing apparatus.

According to a sixth aspect of the present invention there is provided an agent system having a plurality of agents each of which executes predetermined processing while moving through a plurality of nodes connected to an information network, wherein the plurality of nodes respectively have a plurality of agent platforms which receive and execute the agents, a time synchronization function which is arranged in the platform to control an execution time of the agent, a time synchronization server which provides a reference time to each node in the system, and a time synchronization client which provides, to time synchronization function, the reference time provided by the time synchronization server.

According to a seventh aspect of the present invention there is to provide an agent system according to the sixth aspect wherein the time synchronization server of the agent system is operated on a dedicated computer on a network connected by a communication network.

According to an eighth aspect of the present invention there is to provide an agent system according to the seventh aspect wherein a NTP (Network Time Protocol) server is used as the time synchronization server, and a NTP client is used as the time synchronization client.

According to a ninth aspect of the present invention there is to provide an agent system according to the fourth aspect wherein time synchronization to a remote site connected through a communication line is established.

According to a tenth aspect of the present invention there is to provide an agent system according to the fifth aspect wherein time synchronization to a remote site connected through a communication line is established.

According to an eleventh aspect of the present invention there is to provide an agent system according to the fourth aspect wherein a radio control clock is used as the reference time providing apparatus.

According to a twelfth aspect of the present invention there is to provide an agent system having a plurality of agents each of which executes predetermined processing by accessing shared data present on a predetermined node or using a shared function provided by a predetermined node while moving through a plurality of nodes connected to an information network, wherein the plurality of nodes respectively have a plurality of agent platforms which receive and execute the agents, and one of the agent platform and the node has management means only through which the shared data or shared function can be accessed.

According to a thirteenth aspect of the present invention there is to provide an agent system according to the twelfth aspect wherein the management means has a function of setting protection against another access when data or function managed by the management means is being used, and notifying the agent that has accessed the data or the function during protection of that the data or function is accessible after cancelling the protection.

According to a fourteenth aspect of the present invention there is provided an agent system according to the twelfth aspect wherein each agent registers, in the management means in advance, to receive a notification when the shared data is partially rewritten or a predetermined function of the shared function is invoked, and when the shared data is actually rewritten, or the function is actually invoked, a notification is sent.

According to a fifteenth aspect of the present invention there is provided an agent system according to the thirteenth or fourteenth aspect, wherein each agent interrupts processing until the notification is received from the management means, and resumes the processing after the notification is received.

According to a sixteenth aspect of the present invention there is provided an agent system having a plurality of agents each of which executes predetermined processing while moving through a plurality of nodes connected to an information network, wherein when the agent is to be moved from one node to another node, a plurality of copies of the agent are generated, the plurality of generated agents are moved to the moving destination node through different paths on the information network, and desired processing is started on the moving destination node after all the agents have arrived or a majority of the agents have arrived.

According to a seventeenth aspect of the present invention there is to provide an agent system having a plurality of agents each of which executes predetermined processing while moving through a plurality of nodes connected to an information network, wherein the plurality of nodes respectively have plurality of agent platforms which receive and execute the agents, and the number of agents to be simultaneously received by one agent platform is limited to a predetermined number.

According to an eighteenth aspect of the present invention there is provided an agent system according to the seventeenth aspect, wherein each agent platform has a queue for agents that are waiting for reception, and when an agent platform has already received the maximum number of agents, an agent that is not received is put into the queue, and when an agent which is received and running moves or disappears, the agent in the queue is received by the agent platform.

According to a nineteenth aspect of the present invention there is provided an agent system according to the eighteenth aspect, wherein priority is set for each agent, and when the agents are to be put into the queue because the destination agent platform has already received the maximum number of agents, the order of the agents in the queue is determined in accordance with the priority of each agent.

According to a twentieth aspect of the present invention there is provided an agent system according to the eighteenth aspect, wherein priority is set for each agent, and when the destination agent platform has already received the maximum number of agents, and the priority of an agent that has arrived later is higher than that of an agent that is currently running, an agent with lowest priority in the running agents is moved to the queue, and the agent with higher priority is received.

According to a 21 st aspect of the present invention there is provided an agent system having a plurality of agents each of which executes predetermined processing while moving through a plurality of nodes connected to an information network, characterized in that the plurality of nodes respectively have a plurality of agent platforms which receive and execute the agents, and each platform permits/inhibits reception by determining a function and characteristics of a received agent.

According to a 22nd aspect of the present invention there is provided an agent system having a plurality of agents each of which executes predetermined processing while moving through a plurality of nodes connected to an information network, wherein the plurality of nodes respectively have a plurality of agent platforms which receive and execute the agents, each agent platform has an event function and, when an event has occurred, sends a message to an agent that has been registered in advance in the event function so as to cause the agent to perform operation in accordance with the event.

According to a 23rd aspect of the present invention there is provided an agent system having a plurality of agents each of which executes predetermined processing while moving through a plurality of nodes connected to an information network, wherein the plurality of nodes respectively have a plurality of agent platforms which receive and execute the agents, when an agent platform is to move the agent to the next moving destination, communication that gives no response even after elapse of a predetermined time is forcibly disconnected.

## Claims

1. An agent system having a plurality of agents each of which executes predetermined processing while moving through a plurality of nodes connected to an information network, **characterized in that** the plurality of nodes respectively have a plurality of agent platforms which receive and execute the agents,
each of the plurality of platforms has a time synchronization function which controls a processing execution time of the agent, and
each of the plurality of nodes has an apparatus which provides a reference time to the time synchronization function.

2. The agent system according to claim 1, **characterized in that** a GPS is used as the reference time providing apparatus.

3. The agent system according to claim 1, **characterized in that** time synchronization to a remote site connected through a communication line is established.

4. The agent system according to claim 3, **characterized in that** time synchronization to a remote site connected through a communication line is established.

5. The agent system according to claim 1, **characterized in that** a radio control clock is used as the reference time providing apparatus.
